(19) Europäisches Patentamt
European Patent Office
Office européen des brevets

(11) **EP 3 616 033 B1**

(12) **EUROPEAN PATENT SPECIFICATION**

(45) Date of publication and mention
of the grant of the patent:
**29.05.2024 Bulletin 2024/22**

(21) Application number: **18725358.8**

(22) Date of filing: **23.04.2018**

(51) International Patent Classification (IPC):
**G06F 3/01** $^{(2006.01)}$    **G06T 17/00** $^{(2006.01)}$
**G10K 15/02** $^{(2006.01)}$    **G10K 11/34** $^{(2006.01)}$

(52) Cooperative Patent Classification (CPC):
**G06F 3/016; G06F 3/011; G06T 17/00;**
**G10K 11/34; G10K 15/02**

(86) International application number:
**PCT/US2018/028966**

(87) International publication number:
**WO 2018/200424 (01.11.2018 Gazette 2018/44)**

(54) **ALGORITHM ENHANCEMENTS FOR HAPTIC-BASED PHASED-ARRAY SYSTEMS**

ALGORITHMUSERWEITERUNGEN FÜR HAPTIKBASIERTE PHASENGESTEUERTE PHASENARRAYSYSTEME

AMÉLIORATIONS D'ALGORITHME POUR DES SYSTÈMES RÉSEAU À ÉLÉMENTS EN PHASE À INTERACTION HAPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2017 US 201762489073 P**
**18.05.2017 US 201762507822 P**
**25.05.2017 US 201762511125 P**
**15.01.2018 US 201862617515 P**
**04.04.2018 US 201862652393 P**
**09.04.2018 US 201862655169 P**
**10.04.2018 US 201862655386 P**

(43) Date of publication of application:
**04.03.2020 Bulletin 2020/10**

(73) Proprietor: **Ultrahaptics IP Ltd**
**Bristol BS2 0EL (GB)**

(72) Inventors:
• **KAPPUS, Brian**
**Mountain View, CA 94043 (US)**
• **MUÑOZ, Jonathan, Martinez**
**04720 Almeria (ES)**
• **BLENKINSOPP, Robert**
**Bristol BS8 2HJ (GB)**
• **HARWOOD, Adam**
**Bristol BS8 2HJ (GB)**
• **LONG, Benjamin, John Oliver**
**Bristol BS4 3AS (GB)**
• **CARTER, Thomas, Andrew**
**Bristol BS16 1FD (GB)**
• **WREN, William**
**San Jose, CA 95125 (US)**

(74) Representative: **Latham, Stuart Alexander**
**Withers & Rogers LLP**
**2 London Bridge**
**London SE1 9RA (GB)**

(56) References cited:
**GB-A- 2 513 884**    **US-A1- 2016 249 150**
**US-A1- 2016 249 150**

• **BENJAMIN LONG ET AL: "Rendering volumetric haptic shapes in mid-air using ultrasound", ACM TRANSACTIONS ON GRAPHICS, ACM, NY, US, vol. 33, no. 6, 19 November 2014 (2014-11-19), pages 1-10, XP058060840, ISSN: 0730-0301, DOI: 10.1145/2661229.2661257**
• **BENJAMIN LONG ET AL: "Rendering volumetric haptic shapes in mid-air using ultrasound", ACM TRANSACTIONS ON GRAPHICS (TOG), ACM, US, vol. 33, no. 6, 19 November 2014 (2014-11-19), pages 1-10, XP058060840, ISSN: 0730-0301, DOI: 10.1145/2661229.2661257**

- **XU HONGYI ET AL: "6-DoF Haptic Rendering Using Continuous Collision Detection between Points and Signed Distance Fields", IEEE TRANSACTIONS ON HAPTICS, IEEE, USA, vol. 10, no. 2, 27 September 2016 (2016-09-27), pages 151-161, XP011653704, ISSN: 1939-1412, DOI: 10.1109/TOH.2016.2613872 [retrieved on 2017-06-16]**
- **PÉTER TAMÁS KOVÁCS ET AL: "Tangible Holographic 3D Objects with Virtual Touch", INTERACTIVE TABLETOPS & SURFACES, ACM, 2 PENN PLAZA, SUITE 701 NEW YORK NY 10121-0701 USA, 15 November 2015 (2015-11-15), pages 319-324, XP058077660, DOI: 10.1145/2817721.2823500 ISBN: 978-1-4503-3899-8**
- **BENJAMIN LONG ET AL: "Rendering volumetric haptic shapes in mid-air using ultrasound", ACM TRANSACTIONS ON GRAPHICS, ACM, NY, US, vol. 33, no. 6, 19 November 2014 (2014-11-19), pages 1-10, XP058060840, ISSN: 0730-0301, DOI: 10.1145/2661229.2661257**

**Description**

RELATED APPLICATIONS

This application claims the benefit of the following seven U.S. Provisional Patent Applications :

1) Serial No. 62/489,073, filed on April 24, 2017;
2) Serial No. 62/507,822, filed on May 18, 2017;
3) Serial No. 62/511,125, filed on May 25, 2017;
4) Serial No. 62/617,515, filed on January 15, 2018.
5) Serial No. 62/652,393, filed on April 4, 2018;
6) Serial No. 62/655,169, filed on April 9, 2018; and
7) Serial No. 62/655,386, filed on April 10, 2018

FIELD OF THE DISCLOSURE

The present disclosure relates generally to algorithm enhancements in haptic-based phased-array systems.

BACKGROUND

A continuous distribution of sound energy, which will be referred to as an "acoustic field", can be used for a range of applications including haptic feedback in mid-air.

In this acoustic field, one or more control points may be defined as locations within the field at which a specified amplitude should be achieved. These control points may be amplitude modulated with a signal, and, as a result produce vibrotactile feedback in mid-air. An alternative method to produce feedback is to create control points that are not modulated in amplitude and instead move them around spatially to create spatio-temporal modulation that can be felt. A physical set of transducers may then be controlled to create an acoustic field exhibiting the desired amplitude at the control points. The frequency at which the transducers are driven is known as the carrier frequency. This is usually chosen to be the resonant frequency of the transducer and is often in the ultrasonic range.

An eigensystem may be used to determine for a given spatial distribution of control points with specified output the set of wave phases that are the most efficiently realizable. Although the control points change their respective properties continuously, there is no restriction that the resulting phases output from the eigensystem must be continuous. On the contrary, discrete jumps in the "best" phase configuration occur with some regularity when control points move smoothly in space, as in the case of spatio-temporally modulated control points. In the worst case, this can cause a control point phase to flip from phase to antiphase. This creates localized cancellation of the wave that increases the noise floor by causing sudden changes in the field, on top of potentially "stalling" transducers by forcing them to immediately try to vibrate in way that is diametrically opposed to their current vibration. In less extreme cases, this can cause transducers to vibrate in a less than optimum way as a function of how abrupt the phase change is.

A further way in which a phase change can interact with the physical transducer elements is by modifying the effective frequency emitted. An interpolation between transducer activation states requires moving between different phase offsets. This has been previously disclosed to be necessary for keeping the audible noise generated by the device during operation to a minimum. This interpolation generates a different, new frequency as the phase offset changes smoothly. The speed of the phase change influences how far from the carrier frequency the new frequency generated deviates. Physical transducers tend to have a narrowband response, meaning that the transducers become less efficient as this frequency moves away from the carrier frequency. Therefore, fast changes in the phase of the transducer, which are implied by fast changes in the phase of a control point, produce inefficiency.

Previously, a method of using phase modulation at the control point to find time-of-flight and therefore track and image objects in the acoustic field has been disclosed. Discontinuous jumps in the phase of control points can generate spurious detections in a system modified to detect sharp phase changes for tracking purposes.

For all the above reasons, methods of preventing and smoothing abrupt changes to the phases would be beneficial and commercially useful, given they provide a path to the amelioration of these issues.

Further, for haptic feedback, a typical arrangement consists of a phased array of ultrasonic emitters. These can be arranged on a plane or any curved surface and are driven in such a way as to create one or many points of constructive interference in the air. At these points exist regions of high-pressure ultrasound. Without additional manipulation, the small amount of static pressure is below the threshold of human perception. In order to induce a haptic effect, the traditional method is to modulate the emitted sound waves by a lower-frequency value, i.e. 200Hz. This on-then-off nature of the acoustic pressure induces a noticeable sensation on the skin similar to a 200Hz vibration. Another method is to translate the focal point by manipulation of the phased array to a distinct point and then return it to the initial point at a similar frequency, with similar effect.

It appears that all that is needed to produce a haptic effect is to create a modulated pressure field. Presented here is a third method to achieve this by reconstructing a modulated pressure field using emitters firing at different frequencies.

Further, in an acoustic field, one or more control points can be defined. These control points may be amplitude modulated with a signal and as a result produce vibrotactile feedback in mid-air. An alternative method to produce feedback is to create control points that are not modulated in amplitude and move them around spatially to create spatio-temporal modulation that can be felt.

For a given array, the amount of energy that it can bring to bear at a point may be monitored through reflexive self-simulation. There are a few reasons that this might be desirable, including the monitoring of energy requirements, compliance with health and safety regulations, transducer and simulation self-calibration through feedback loops, and the ability to dynamically choose trade-offs between output quality and power.

Previously, this has been monitored using the assumption that each of the transducers in the array emit a continuous monochromatic signal, or are continuous but otherwise modulated by additional waves that modify the component at the frequency of interest. However, as both the frequency of updates increases and the system size increases to a point at which the assumptions that the differences in travel time of the waves is insignificant fails, the predictions of such techniques become less accurate. Worse, in cases where the control points are moving, the measurement of time-weighted averages of acoustic quantities in a region of space may be completely misleading. For these reasons, a more comprehensive reflexive simulation technique within the acoustic phased-array device would be of commercial interest.

Further, using the existing technology to provide users with haptic feedback requires time consuming manual custom creation of each haptic sensation. This approach has other limitations such as only supporting simple 3D shapes and surfaces.

The new solution described enables efficient production of haptic sensations from a 3D shape; it supports complex 3D shapes and surfaces and can describe a range of depths into objects and give haptic sensations to all of them

Applying mid-air haptic sensations to objects of arbitrary 3D geometry. In order to make a 3D object "feelable" in a virtual environment, telepresence application or other computer-mediated experience, the detail of a user's hand position and intersection relative to the virtual object must be calculated to ensure that sensation of the object on the user's hand is as close as possible to a realistic depiction of that object in reality.

This requires information about both the user's hand and objects in the scene we are desired to be "feelable" to be combined and processed to produce results.

Further, there is a need to generate location-based haptics using ultrasonic arrays for haptic feedback. It is necessary in an environment with many transducers/arrays to provide a method to select which transducers to activate based on user location information. Specifically, there may be an exchange of information between the user(s) and the transducer control processor(s) having the ability to use that information for optimal haptic generation shadows and the like.

Further, in order to produce effects that result in mid-air haptics, parametric audio or levitation, the acoustic field must necessarily be updated in time. The way in which phased array systems are solved is to consider each transducer and encode the time of flight as a complex value. This is powerful, because it allows the phased array to be considered as a system running 'for all time'; the waves are always assumed to have reached a steady state. This is only achievable by discarding significant quantities of information on the time-of-flight from each transducer-a necessity driven by the one-to-many relationship between time-of-flight value and phase angles assumed by harmonic systems. Unfortunately, if a phased array is updated through time, this is also a flaw.

The wave speed can be fundamentally too slow for waves created at the same time in different spatial positions on the array or arrays to appreciably reach the same control point at the same time. This is compounded by the fact that also multiple control points will have different wave traversal times from the same source. This, in quickly updating or wide aperture array configurations will cause differences in time of arrival, causing the waveform created at the control point to be smoothed out in time and smeared in space. If the array is small enough in space to be traversed quickly by a wave or the updates slow through time compared to the wave speed, the deleterious effects of these travel time differences can be so small as to be unnoticeable.

Given the high-frequency update rates required by the spatio-temporal modulation in ultrasonic haptics with multiple and/or large aperture arrays being more routinely considered in a range of applications, an approach is required to address this growing issue. As this is a problem that blocks a variety of future technologies, a coherent and tractable solution to this could be much sought after.

Further, the human auditory system is capable of discriminating small differences in the phase of audible signals to localize source of sounds to remarkable precision. Traditional parametric audio suffers from the fact that it is a vibration emitted from a wide flat surface with no change in phase or signal delay across the surface of the speaker. The result is that each channel of audio produced unintentionally encodes phase information that may distort its perception, or worse reveal to the human that it was emitted from a surface and not the intended object in the recreated audio scene. US 2016/0249150 A1 discloses a system providing various improved processing techniques for haptic feedback. An acoustic field is defined by one or more control points in a space within which the acoustic field may exist. Each control point is assigned an amplitude value equating to a desired amplitude of the acoustic field at the control point. Transducers are then controlled to create an acoustic field exhibiting the desired amplitude at each of the control points. When human skin interacts with the acoustic field, vibrations of the skin are interpreted by mechanoreceptors being excited and sending signals to the brain via the nervous system.

BENJAMIN LONG ET AL: "Rendering Volumetric Haptic Shapes in Mid-Air using Ultrasound", ACM TRANSACTIONS ON GRAPHICS, ACM, NY, US, vol. 33, no.6, 19 November 2014, pages 1-10, discloses a method for creating three-dimensional haptic shapes in mid-air using focused ultrasound. The approach applies the principles of *acoustic radiation force,* whereby the nonlinear effects of sound produce forces on the skin which are strong enough to generate tactile sensations.

## SUMMARY OF THE INVENTION

The invention is defined in the independent claim 1. Preferred embodiments are defined in dependent claims. The invention as claimed is best understood in light of the embodiments described in Section "I. Control Point Phase Specification Strategies For Phased-Array Systems".

## BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.

Figures 1A, 1B, 1C show captured data monitoring a sampled position of a control trajectory.

Figures 2A, 2B, 2C show captured data monitoring one sampled position of one control trajectory.

Figure 3 shows an octree data structure representation.

Figure 4 shows a representation of depth data of a virtual haptic object mapped to the body part.

Figure 5 shows a binarized representation of Figure 4.

Figure 6 shows an edged representation of Figure 5.

Figure 7 shows a border detection algorithm.

Figure 8 shows a vectorization algorithm.

Figure 9A shows a sample physical layout of a series of haptic-producing arrays and a stationary control point.

Figure 9B shows an output-time histogram for control point samples.

Figure 10A shows a sample physical layout of a series of haptic-producing arrays and a rotating control point.

Figure 10B shows a visualization of time-space histogram for a control trajectory.

Figure 11 shows a transducer output histogram curve used to define temporal coefficients for transducers.

Figure 12 shows a sound field produced by a point with no time delay.

Figure 13 shows a sound field produced by a point with a negative time delay.

Figure 14 shows a simulated ultrasonic acoustic field with amplitude modulation without phase adjustment.

Figure 15 shows a simulated ultrasonic acoustic field with phased modulation.

Figures 16A, 16B, 16C, 16D, 16E show a series of fifteen snapshots at each time step of the behavior of an illustrative system and the state of the waves in the air.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

DETAILED DESCRIPTION

I. Control Point Phase Specification Strategies For Phased-Array Systems

A. Eigenvector

The eigenvector of the eigensystem that describes the effect that one control point of given phase and amplitude has on the other control points of given phases and amplitudes describes a basis vector of a set of linear modifications that have different overall effects on the constructive and destructive interference across the control points. The eigenvector with the greatest corresponding eigenvalue (the dominant eigenvector) will be most likely to generate beneficial interference. This vector is applied by using it to multiply the complex-valued phases and amplitudes of the given system of control points. The effect of this is to make the control points in the system self-interfere optimally.

B. Absolute phase registration of the eigenvector

The approximation to the dominant eigenvector of the eigensystem produced by the power iteration may, over time, generate many different optimum phases for the control point. While these phases have similar angular differences between elements, they may cause the collective phase of the transducers to experience extra drift over time. This has previously been disclosed as being corrected explicitly by finding the average complex-valued transducer activation coefficient and multiplying through by its normalized conjugate value. The effect of this is to make the average phase angle zero, which stabilizes the average frequency around the carrier frequency. While this achieves the correct result, it may not be an ideal solution since it involves a summation over all transducer activation coefficients. This implies synchronized communication and an explicit knowledge of the emitting hardware. A more forgiving approximate solution may be achieved if the basis functions (virtual transducers) encoded by the eigensystem are assumed to be similar to those used in the linear system solution. The differences in how the phases are expressed due to differences in the proportions of produced amplitude by the transducers from each control point can be ignored. Given this, the eigenvector result from the power iteration may have the same collective phase zeroing approach applied to its phases. Again, the complex-values representing the phases of the eigenvector are summed, normalized and conjugated to produce a complex-valued multiplication that enforces a zero-average phase on the eigenvector solution. Due to the linear nature of the system, the stabilizing effect generated here will, given the previously stated assumptions, trickle down to the transducer activation coefficients, therefore providing stabilization to the frequencies output at the transducers.

C. Delta phase limiting of the eigenvector

Even after the application of absolute phase registration, the optimized phases produced by the eigensystem (due to spatial relationships between control points) can change sharply resulting in the introduction of a phase discontinuity at a control point. For the reasons described earlier, this is undesirable. To remedy this, the concept of a phase delta limiter is introduced. This takes the phase expressed at a control point and ensures that the phase does not change more than a given angular amount. The implementation of the phase limiter system works through complex-valued division. By taking the ratio of each of the unit amplitude complex-valued components of the eigenvector in the current time-step to the corresponding set of complex values in the previous time-step, the angular change can be readily determined. If the real part of the ratio is less than the cosine of the maximum permitted angular change, then the limiter has been exceeded. When the limiter is exceeded, the ratio is replaced by the value $\cos m \pm i \sin m$ wherein $m$ is the maximum allowed angular change and the sign is provided by the sign of the imaginary part of the originally computed ratio. Afterwards, the ratio may be multiplied by the result from the previous time-step to produce the current value. This moves each time-step in angle by the maximum amount and so is limited in speed. This has the trickle-down effect at the transducers that the maximum frequency shift is defined and phase discontinuities are bounded. This is especially important to achieve if phase modulation is to be added to the control point for tracking or imaging purposes to prevent spurious creation of unintended phase jumps.

D. Random walk in delta phase

When scaling systems up to multiple devices, it is necessary to reduce as much as possible the communication needed between them to be able to contribute to the same control point in the acoustic field. While the eigensystem gives guarantees of control point phase relationship fidelity, an approach that is probabilistically good enough but does not require the communication and computation involved in the eigensystem may (in these instances) be more suitable. As each device would be ideally unaware of the physical layout of the other devices, the eigensystem would obtain different sets of optimal phases and so these various devices would find themselves unable to contribute to a shared acoustic field. In this case, it would be preferable to adopt a pseudorandom phase approach. One such approach that fits in with the desirable phase limiting properties exhibited by the above is realized by creating a synchronized pseudo-random binary sequence (PRBS) that only requires communication to initialize and synchronize. As precise clock synchronization is required in any case, the extra overhead is negligible. Once initialized, a process of pseudo-random phase walk is applied to each control point through time, by choosing to walk either in negative or positive phase angle depending on the bits of the PRBS. This will by nature be replicated on other devices contributing to the same point, so they will produce the same pseudo-random phase walk which will result in the correct addition of like phases at the control point. There are a small number of worst cases that the eigensystem by nature avoids that this approach, used alone, would find problematic. An example is control points that are less than some small proportion of a wavelength apart being an unphysically large proportion of the difference in their phase angles. If two control points are one-quarter of a wavelength apart then it is not possible for them to be $\pi$ apart in phase angle as that would necessitate a change in frequency. However, these occurrences can be rendered rare by adding to the random walk further heuristics of this nature that do not depend on the configuration of the emitting hardware and can further modify phase angle differences in these corner cases.

II. Multiple frequency method for ultrasound-based haptic feedback

Amplitude modulation can be understood as a time-varying coefficient which is multiplied by a given ultrasonic carrier signal,

$$s_n(t) = A_n(t) \cos\big(\omega_c t + \delta_n(t)\big)$$

where $\omega_c$ is the carrier frequency, $\delta_n(t)$ is the phase shift which constructs the focal points, $s_n(t)$ is the signal out, and $A_n(t)$ is the amplitude modulation function, all at emitter n. Both $\delta_n(t)$ and $A_n(t)$ can change rapidly in time depending on the exact arrangement of constructive points and the desired haptic feel. As a rule, however, every emitter has the same $\omega_c$ and receives at least some modulation $A_n(t)$.

To understand the innovation presented here, consider a single, stationary focal point that is modulated by frequency $\omega_m$. In this case, we can write $A_n(t) = \cos(\omega_m t)$ and phase will not change in time. This reduces the above equation to,

$$s_n(t) = \cos(\omega_m t) \cos(\omega_c t + \delta_n).$$

This can be rewritten to show its multi-frequency nature,

$$s_n(t) = \tfrac{1}{2}\cos\big((\omega_c + \omega_m)t + \delta_n\big) + \tfrac{1}{2}\cos\big((\omega_c - \omega_m)t + \delta_n\big).$$

This illustrates the well-known phenomenon of frequency-splitting using amplitude modulation. By modulating by $\omega_m$, every emitter is now emitting two frequencies, $\omega_c + \omega_m$ and $\omega_c - \omega_m$. If $\omega_m$ is sufficiently small compared to $\omega_c$, the solution which generated $\delta_n$ will hold and the pressure field will stay focused at the intended focal point.

Another way to generate this pressure field at the focal point is divide up the necessary frequencies to different emitters and have each group independently focus to the same point. For instance, consider,

$$s_n(t) = \cos\big((\omega_c + \omega_m)t + \delta_n\big), \; n = even,$$

$$s_n(t) = \cos\big((\omega_c - \omega_m)t + \delta_n\big), \; n = odd.$$

An array with many emitters and appropriate $\delta_n$ will create a focal point with a time-varying pressure field functionally equivalent to the above example using amplitude modulation.

This method has several advantages over the traditional amplitude-modulated approach. First, the acoustic power which each emitter is producing is double that of the single-point modulated scenario. This will yield a stronger pressure field at the focal point and greater sensation. Second, parametric audio production should be reduced because each emitter is no longer producing two frequencies which can interact. The parametric effect relies on multiple frequency sound waves traveling along collinear vectors for the nonlinearity to build in amplitude. Bringing the sound fields into focus will still cause interaction but should be over less distance and with less alignment and therefore will create less nonlinear audio.

More complex wave functions can be generated by reconstructing the Fourier-series representation of the desired waveform using discrete groups of emitters for a given time interval. Each emitter group need not emit only one frequency but can contribute multiple if necessary. In practice, an optimization scheme could be used to group frequencies (and associated amplitudes) to maximize the power from each emitter. Simultaneously, grouping frequencies which are close together (in Hz) will help to minimize parametric audio from each sub-section due to the high-pass nature of parametric audio. In theory, each group can be as little as a single emitter but in practice many might be required to generate necessary acoustic pressure. Amplitude for a particular frequency or set of frequencies can be affected by either reducing the output of a group or simply using fewer emitters for that set of frequencies. Complex spatial grouping of separate frequencies could produce haptic sensations unique to this method of pressure-field generation.

Creating multiple focal points simultaneously as well as fast translation can be achieved using similar techniques as other ultrasonic haptic feedback. Mixing a complex pressure-field modulation with separate spatiotemporal modulation with one moving point can be done without associated 50% modulation loss.

III. High-Frequency Temporally Dynamic Level Simulation for Acoustic Phased-Array Systems

A. Measurable Quantities in the Acoustic Field

The measurement of acoustic field strength may be accomplished in a number of different ways. Nonetheless, some measurement techniques are preferred over others, not necessarily because they give better information but because they are physically easier to measure. For example, a measurement of sound pressure level (SPL) may be obtained from a simple microphone. Although the sound pressure level is primarily a measurement of the potential energy of the acoustic wave and is only useful in situations where simplifying assumptions can be used to assert the relevance of the measure, it remains the yardstick of acoustic behavior because it is easily measured. (In a simulated system, there is no such limitation.) Further, sound intensity level (SIL) is a measurement of the total energy flux of the wave, while the sound velocity level (SVL) is a measurement of the kinetic energy and is the acoustic equivalent of the Poynting vector from the study of electromagnetism. Both are difficult to measure even with specialized equipment because they involve measuring particle motions which are in general very small (the root-mean-squared particle displacement at 40 kHz is 199 nanometers at 120 dB). In the case of a single acoustic source, these have been defined to have equivalent decibel levels given their initial properties at a 0 dB level. On the other hand, since these properties are vectors, they behave differently than their scalar pressure counterparts in cases where there are many sources from different directions, such as in the instance of an acoustic phased array. In these cases, the decibel levels given by each of the different quantities diverges. Given the access simulation does not dictate which to use in the same way that physical measurement does, it is unclear which is the correct value to use, as most literature is based on the inaccurate but easy to measure SPL value. For this reason, the technique can use any one of these quantities depending on need.

B. Embedding a simulation into the device

On each solver cycle, the device solves for the complex-valued activation coefficients that are to be used to generate the waveform sent to the transducers. These transducer coefficients are shunted into an auxiliary simulation process that then performs the simulation. The simulation process may have a number of spatial sample points defined, which may be intended to also become control points at a future time when the appropriate waves reach their target. Each sample point may be defined by a spatial location or marked busy. If it has a spatial location defined, it has a buffer associated with it that defines the 'time history' of the sample point. Complex values for pressure and particle velocity in each of the x, y and z axes may be defined for each point along the time history. This consists of eight values that represent acoustic quantities, $\Re(p)$, $\Im(p)$, $\Re(u_x)$, $\Im(u_x)$, $\Re(u_y)$, $\Im(u_y)$, $\Re(u_z)$ and $\Im(u_z)$.

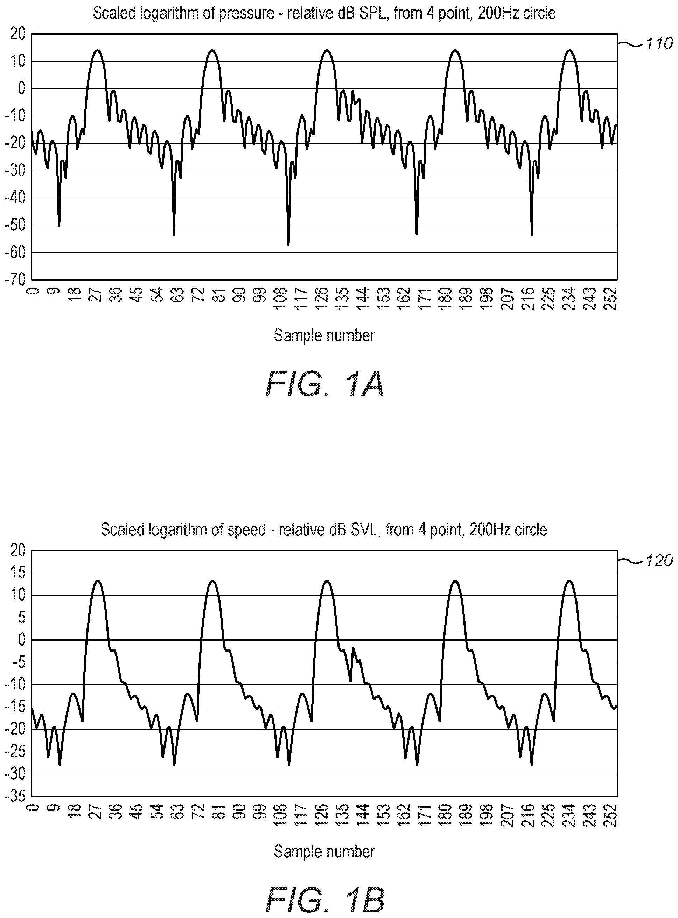

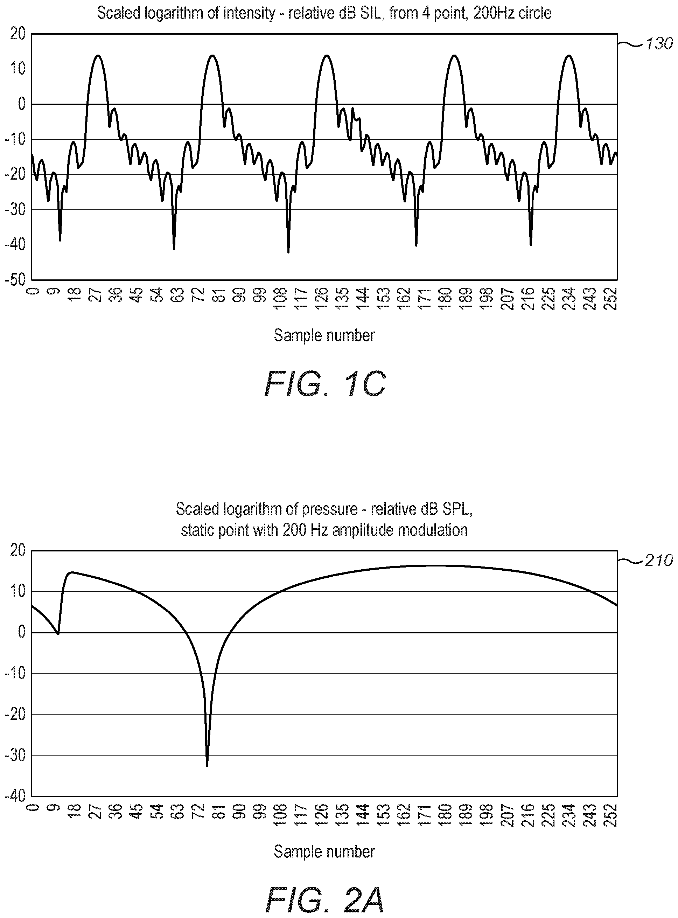

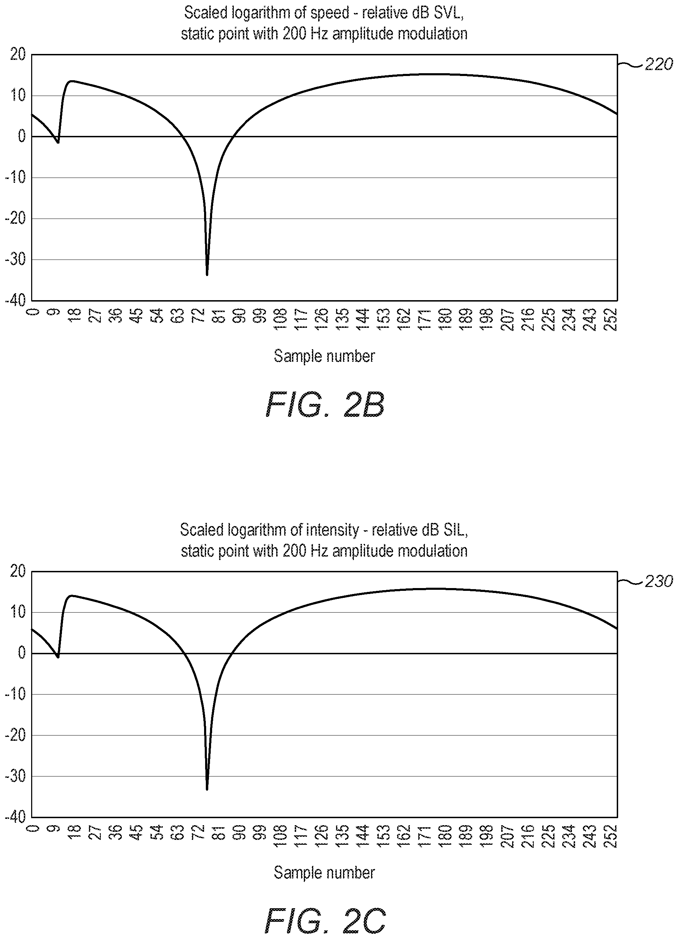

Each transducer is modelled for each individual wave train it emits, which may be only a single wave. For each transducer and sample point pair, a time-of-flight is calculated and the contribution of the transducer to the sample point placed in the buffer location with the corresponding time offset. The buffer location may be anti-aliased in that the incident wave is split amongst the points in time. The time offset must change with the wave emission times such that the pressure and particle velocities of each wave through time can interfere with other waves incident at the same location and time. In this way, the history is collected until the emission time reaches the end of the buffer. Due to compensation for the time-of-flight, the initial and end points of the buffer may be unrepresentative, at which point, the buffer is marked busy. Since the system has recorded the complex valued information, the sound pressure level can be found from the absolute value of the complex number $\Re(p)$, $\Im(p)$. The sound velocity level may be generated from the length of the vector generated by the absolute values of $\Re(u_x)$, $\Im(u_x)$, $\Re(u_y)$, $\Im(u_y)$, $\Re(u_z)$ and $\Im(u_z)$. All eight values can be used to find the sound intensity level by multiplying the pressure with the complex conjugate of the particle velocities and finding the length of the vector generated by those absolute values. The data in the buffer can then be summarized to yield a maximum level, a time-weighted average level or a level with any other kind of windowing average or combination thereof. Graphs of the simulation data obtained from this technique are demonstrated in Figures 1A, 1B, 1C, 2A, 2B and 2C.

Figures 1A, 1B, 1C show captured data from the implemented technique, which is monitoring one sampled position of one control trajectory at 40kHz. There are four spatio-modulated points moving in a ring each at 200Hz. Figure 1A shows SPL 110 of the static point in the circle; Figure 1B shows SVL 120 in the circle in the circle; and Figure 1C 130 shows square root SIL of the static point in the circle. The y-axis of these graphs are a unitless relative dB.

As can be seen from the graphs 110 120 130, the effective frequency is then 800Hz (4 x 200Hz). Also there is a spike in the graphs 110 120 130 when each of the of control point passes through the "microphone" point.

Due to effects of time-of-flight and wrap-around, some sample slots are referred to by multiple points along the time line, so post-processing may be necessary to recover the true envelope of the signal.

Figures 2A, 2B, 2C show captured data from the implemented technique, which is monitoring one sampled position of one control trajectory at 40kHz. There is one amplitude point modulated with a squared sine wave at 200Hz. Here, the virtual detection is happening at the same point as the control point. The effect of the time-of-flight and wrap-around can be seen in the discontinuity at the beginning of the graph (around sample 15), as some sample slots are referred to by multiple points along the time line, so post-processing may be necessary to recover the true envelope of the signal. Figure 2A shows SPL 210, Figure 2B shows SVL 220 and Figure 2C 230 shows square root SIL, each with a unitless relative dB on the y-axis.

If it is already known that only a subset of the values will ever be needed, significant savings can be made by eliminating the extra entries from the storage of the time history.

### C. Simulations across multiple devices

Simulating across multiple devices can be achieved by synchronizing the sample point time histories and adding them together to simulate the interference. However, due to the need for time histories to contain many sample points with up to eight (three complex velocity components and one complex pressure) individual recorded quantities in each sample, exporting the time history is bandwidth intensive. For this reason, a worst-case bound of the simulated quantity may be found by modifying the time history into an intermediate form before adding together the values. As the individual devices represent banks of sources that are often separated in space, the vector forms of the quantities will likely have portions that cancel. Nevertheless, the complex-valued portions of the cancellations involved in the noise surrounding the control points in the time history will likely either be coherent or small and noisy. Therefore, the method can in some instances discard the complex-valued behavior of the acoustic quantities and assume that they are coherent in phase across multiple devices. To achieve this, it is possible to obtain the non-complex-valued direction of the acoustic Poynting vector which may have negative components from the real part of the acoustic intensity as derived from the eight quantities. In the cases where a vector component is necessary, the scalar value of the quantity, which may also remain complex-valued, that may be summarized as before and then apply this scalar to a summarized version of the Poynting vector. In this way, if the phase angle of a vector quantity is removed by the process of summarizing it, the vector quantity retains its direction which may still imply further cancellation.

### D. Leveraging simulations to enforce a maximum permitted output

As the simulation output can be fed back into the solver, a maximum permitted output of a given quantity may be enforced by modulating the restrictions on the limits of the waveform envelopes with the simulation output level. By so doing, if the waveform envelopes are constricted they will expand and contract to match the simulation output, but then only on the condition that the total power is restricted by the maximum permitted output.

## IV. Three-Dimensional Haptics Using Depth Information

This solution enables efficient creation of haptics across the surface of the user's skin when interacting with a virtual object in a scene.

For all points on a user's hand, the distance to the object or depth into the object is calculated, by using an octree representation of the object which is sampled against. An octree is a tree data structure in which each internal node has exactly eight children. Octrees are most often used to partition a three-dimensional space by recursively subdividing it into eight octants.

The resulting image of depth on the user's hand is then processed to create a haptic sensation before touching an object or of the object itself which is accurate to the actual geometry of the object. This haptic sensation can be dynamically updated as the objects in the scene or the position of the user's hand in the scene changes. Places where lines cross in the cone have information about distance between the location and the geometry surface.

## A. Introduction

Depth information may be obtained at any point by considering a level set representation of a 3D scene that may be generated statically or dynamically through software. A level set curve is one that satisfies the Eikonal equation:

$$|\nabla u(x, y, z)| = 1$$

In a 3D scene, the surfaces of an object or objects can be represented as an isocontour wherein $u(x, y, z) = 0$. In this way, positive values of $u$ imply distance outside these surfaces, and negative numbers imply depth inside these same objects.

By then solving this equation at a number of relevant points in space chosen by generating an octree representation of the scene, the distance of salient user features can be calculated efficiently. At these same points, the 3D gradient of the equation, $\nabla u(x, y, z)$, may also be stored. Using these distances, haptic effects may be generated and recreated in mid-air by interpolating the distance and other field values at the vertices of the octree cells. This provides a smooth approximation to the haptic parameters as the approximation increases in fidelity as the surface geometry is approached by the virtual representation of the surface of the skin.

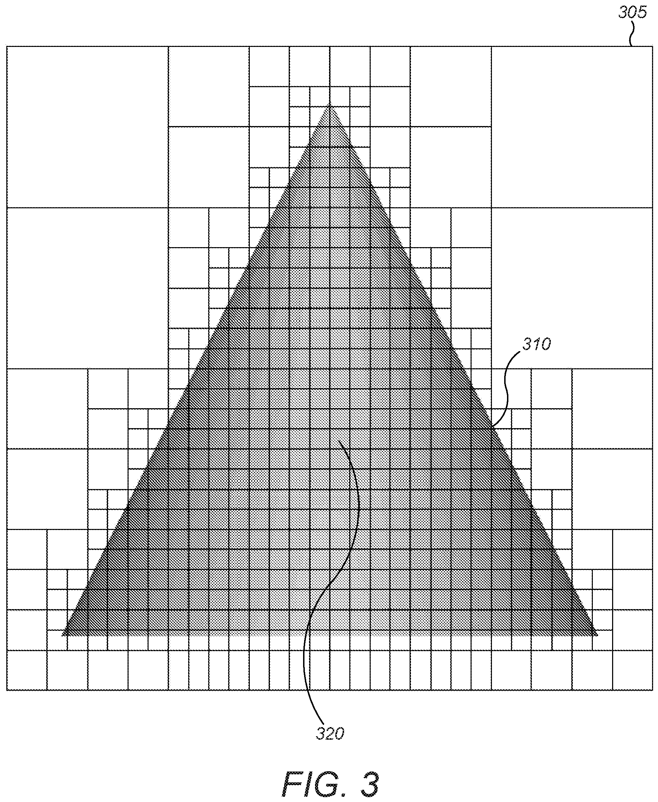

Figure 3 shows an octree data structure decomposition of a sample geometry 305, in this case a cone 310. Here, the depth information of a cone is stored. Inner nodes contain information about the eight children that subdivide the region. Leaf nodes such as 320 store depth information of the represented region.

The distance values, which may be positive or negative distances to the nearest surface of the geometry, are expressed on the corners of the leaf nodes of the spatial tree and interpolated to sample the distance at the sample points that are co-located with points detected on the users by a tracking system. Points that are within the geometry consequently have distances that are either positive or negative and points outside the geometry have distances that are expressed using values with the opposite sign.

The attachment of data to the vertices of the octree and any generalized mesh may be achieved, for example, through the implementation of the Fast Marching Method, as detailed in "The Fast Construction of Extension Velocities in Level Set Methods" (D. Adalsteinsson , J. A. Sethian., Journal of Computational Physics 1997). By replacing the velocity vector field in their method by gradient, vector or scalars fields that describe haptic effects, the scene may be populated by the structure described.

## B. Pre-Touch Presence

By understanding the distance of a hand (or body part) from an object-even when it has not intersected the object-allows a user to be made aware of an object before touching it. This enables a haptic method to be used that allows the user to perceive and locate an object via a touch-based mechanism that is beyond realism yet still believable. This also provides a haptic method of indicating a pre-interaction state analogous to how a cursor changes shape to show context or a potential interaction.

This may also be used to guide a user towards or away from an object at a distance.

C. Surface Edge

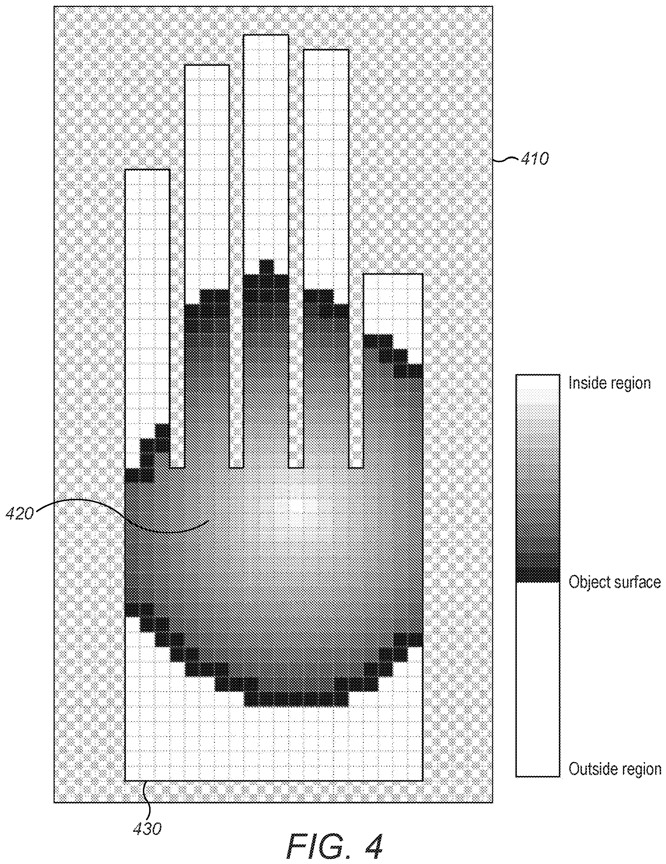

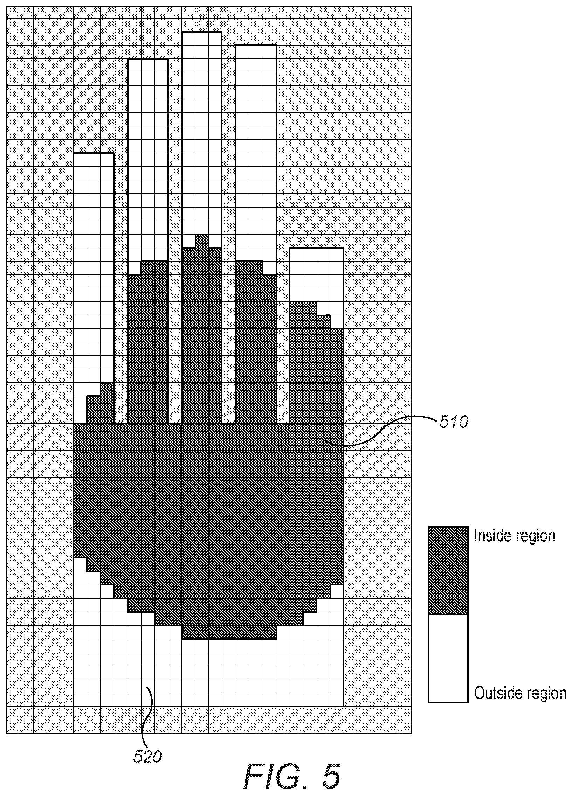

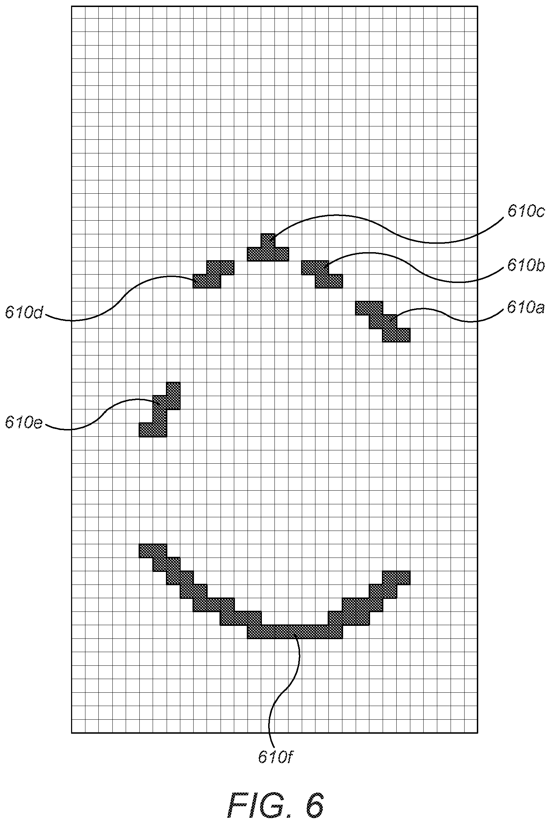

Figure 4 shows a representation 410 of depth data 420 of a virtual haptic object mapped to the body part 430. Figure 5 shows a binarized representation of Figure 4 using the criteria of positive values 510 and negative values 520. Figure 6 shows the result of an edge detection algorithm of Figure 5, where the surface edges 610a, 610b, 610c, 610d, 610e, 610f can be extracted along the body part. This may then be used to generate a haptic path as set forth below.

- A set of points belonging to the body part are evaluated using the function $u(x, y, z)$, mapping the depth data to it (Figure 4).

- The depth data is binarized using the threshold $u(x, y, z) = 0$ (Figure 5).

- A border detection algorithm is used to get the borders of the binarized data (Figure 6).

- The points belonging to the border are sequenced using a vectorization algorithm to form one or more paths that will be used to haptically draw the surface edge (Figure 6).

- The paths obtained are haptically rendered.

D. Border detection algorithm

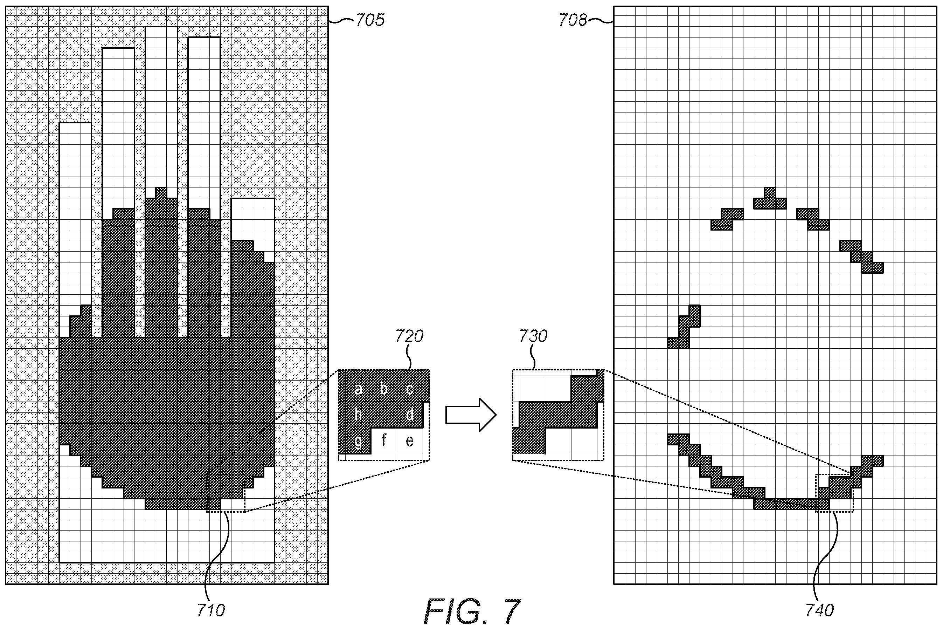

Shown in Figure 7 is a border detection algorithm converting a binarized representation 705 into a border representation 708.

- For every point P, it belongs to the border if it meets all the following conditions:

- $u(P) \geq 0$ (current point 710 meets the condition)

    - Has at least one 3x3 neighbor point N that satisfies $u(N) < 0$ (in Figure 7, f and e points 720 are neighbors).

Those points that qualify as part of the border and those that do not 730 become part 740 of the greater representation of the entire border.

E. Vectorization algorithm

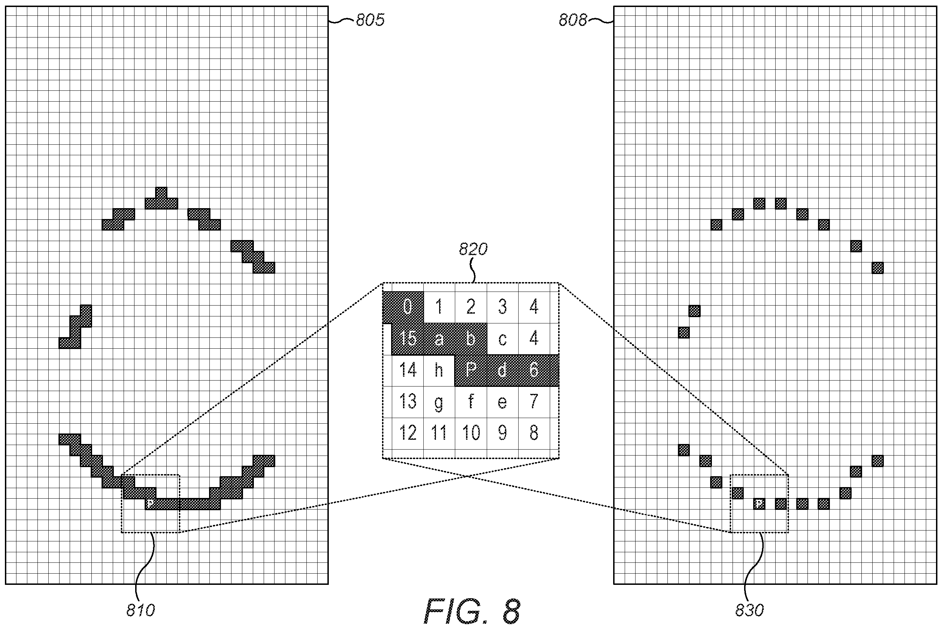

Shown in Figure 8 is a vectorization algorithm converting a border representation 805 into a vectorization representation 808.
Given a point P 810 that belongs to the border:

- As shown in the $5 \times 5$ matrix extracted from the border representation 820, points 0 to 15 are their $5 \times 5$ neighbors;

- Points 'a' to 'h' are their $3 \times 3$ neighbors

- A 5x5 neighbor N is connected to P if it belongs to the border and there is another point C that satisfies:

        -- Is a 3x3 neighbor of N;

        -- It belongs to the border; and

        -- Is a 3x3 neighbor of P.

The algorithm may run as follows:

    1. Start a new path.

    2. Find an unexplored point that belongs to the border and add it to the path (P).

    3. Find the points that meet following conditions:

- Point is a 5x5 neighbor of P;

- Point belongs to the border;

- Point is connected to P; and

- Previous point in the 5x5 neighborhood of P (counter-clockwise position) does not belong to the border.

4. Mark all the points inside the 5x5 region as explored.

5. If more than one point meets the conditions, add all but the first one to the pending list (points 6 and 15 meet the conditions in the 5x5 matrix 820).

6. If at least one point T meets the conditions, add T to the path and continue with Step 3 using T (point 6 is added to the path 830).

7. If there are no points meeting the conditions, finish the path.

8. If there is a point L inside the pending list:

- Start a new path;

- Add L to the path;

- Remove L from the pending list; and

- Continue with Step 3 using L.

F. Surface Filling/Painting

The depth data may be mapped across a body part (Figure 4), and then used to create curves from the 3D data, which may then be extruded or lofted to present an object hull in a haptic manner. Using the 3D data obtained through sampling according to the interpolation of values across the octree or the mesh built, a surface or edge may be rendered into haptic surfaces. The interpolation may be computed for instance using a bilinear or trilinear interpolation, use of barycentric weights or any other desired scheme. This enables texture coordinates and wrapping to be provided, but with haptic instead of visual texturing.

G. Gradient Surface Filling/Painting

Using the gradient data sampled across the body part through this technique (Figure 4), the direction to and from an object may be found. Using this data, a directional haptic effect may be produced that occurs parallel or perpendicular to this direction, producing an anisotropic haptic experience.

H. Feelings at Different Depths

The depth data mapped to the body part (Figure 4) may be further processed to generate depth textures, or haptic experiences that differ with depth inside an object, or distance away from an object. Multiple haptic textures may be created at once to generate the feeling of gradients across, around and through an object.

V. Dynamic transducer activation based on user location information for haptic feedback

An environment containing many transducers and potentially multiple users may create a challenging problem for producing mid-air haptic feedback. First, the system managing the content needs to determine-given one or multiple user relative positions and locations and the scene the users are involved in-a number of haptic control regions for haptic feedback. This may be associated with a number of virtual or holographic objects. Another possibility is a haptic effect generated by the interaction of two users, such as remote touch or induced effect (virtual 'magic spells' and the like).
Creating enough pressure to create a haptic effect at a given control region does not necessarily have a unique transducer activation solution. Activating transducers that are close to the control region and are not being shadowed by some part of a user will provide the strongest possible pressure for that control point for a given number of transducers activated. Additionally, some transducers may be able to contribute to a given control region through reflection from a nearby surface or even a user.

A k-means algorithm may be used to divide the available transducers into groups to create the desired control regions. Multiple control regions can be created by one group of transducers. A transducer model may be used for each iteration to determine optimal division (maximum power) into each given region.

Transducers are not necessarily stationary and the relative locations of each in the area needs to be continually updated to the control system. Transducers mounted on the users themselves can provide acoustic fields for any control region(s) in the scene. Tracking information must be updated for each round of processing by the control system. In another arrangement, transducers may be mounted on devices designed to move in the scene (robot arms, on wheels, drones, etc.). Moving the transducers closer to the spatial power-average location of all control regions in the scene will likely make those transducers more effective. Using a transducer model will further refine this solution and give an optimal displacement direction of movable transducers per time step. Alternatively, moveable transducers that are not necessary to achieve all requested control regions could be displaced towards regions of minimal coverage to anticipate possible new control regions.

The creation of a control region can be refined by the user or tracking system passing tracking information. For instance, if the desired haptic is meant for a user's palm, which is facing down, transducers placed above the user will not be able to contribute to the palm control region (blocked by the top of the hand). A first-order solution would be for the tracking hardware to provide some selection information. In this example, the tracking system may provide a palm direction and therefore provide a go-to transducers below the palm in the normal direction and a no-go to the transducers above the hand. Other information that could be shared includes body location and direction to preclude transducers behind the user which will likely be occluded.

A further refinement may be achieved by calculating detailed shadowing information. Assuming adequate location information, a shadow-map may be created which details which transducer would not be able to contribute to a given control region. At its most basic level, a shadow would include transducers which are occluded by part of a user from a direct-line path to a control point. Calculating this shadow-map can be hardware accelerated in the same manner as shadows are calculated in 3D-graphics including stencil buffers and projection approximations. The shadowed transducers will contribute zero to the pressure at the control point and could be included as zeros in a matrix-based solver. Further refinements could be applied to the shadow information including adding diffraction and scattering information and therefore not be completely zero but model the actual response of the transducer to the region. For complex control regions, this would factor into the complex acoustic contribution of the given transducer. For transducers which could translate in the scene, shadow information could be included in the optimal-displacement algorithm such as moving the transducers so as to minimize shadowing.

Another challenge in this environment is continually updating the relative positions and orientations between the transducers and users. Ultrasonic arrays are able to precisely target inaudible sound. Using this feature, it is possible to address user-mounted microphones in order to calibrate and update location information. This may be in the form of an unfocused pulse with encoded location information.

Alternatively, a control point may be created and rapidly translated in air near the user. When the microphone picks up a specified ultrasound level, a timestamp can be reported to the array (via sound or other electronic method). Referencing its history, the array has a calibration of its location relative to the user. If the microphone information can be streamed to the transducer control system, a control point could be maintained on the user microphone through a variety of feedback control mechanisms, and a relative position continually updated.

In another arrangement, multiple transducers could act as ranging devices and map the nearby environment. When a user is detected, the relative position may be communicated.

## VI. Temporally Dynamic Phased Array Systems

Replacing the notion of control points being spatial points in the acoustic field that are controlled with the notion of spatio-temporal control trajectories that are parameterized in both time and space enables a generalization of phased array technology that expands their possible applications. These control trajectories are sampled, a process that resolves a point in time to a unique point in space, which is then in many ways analogous to the control point concept described in previous disclosures. To determine the control point set to focus upon for any given transducer, for any given point in time, the time-of-flight to each trajectory curve must be used to select which point in time to sample the trajectory to determine the point to solve for such that the trajectory is recreated at the correct times and in the correct order from all transducers. Since this is a highly computationally intensive procedure in that it is likely difficult or impossible to achieve an optimal result in bounded time, there are described herein a number of heuristic approaches that may be used to construct close-to-optimal solutions in low-cost, real-time hardware systems that may be commercially exploitable.

A. Control trajectories

To better address the issues with control points in space only, we define the control points to be dependent on a higher-level abstraction of their required behavior. This will be termed the "control trajectory", an abstract concept that parameterizes the control mechanism to re-write spatial, waveform amplitude and envelope information in terms of time, creating effectively from the users' point of view:

$$\text{trajectory}_i = \{x_i(t), y_i(t), z_i(t), A_i(t), R_i(t)\},$$

Here, the A in $A_i(t)$ refers to amplitude and the R in $R_i(t)$ is range envelope information.

There can be many such trajectories and they are moving in a shared concept of absolute time. At any given instant, they can be sampled to yield the control point state on each trajectory at a given time t.

The control trajectories concept may be implemented in several different ways, by defining connected splines or other interpolants across the points in time or by adding individual control points to the trajectory. Each of these must be achieved ahead of time, but also caters to different needs. A connected spline or other interpolant may be more complex to evaluate, but will be only required every so often, requiring less bandwidth to transmit and shared with other devices. Conversely, an added control point with an implied connection to the last point given may be easy to implement, requiring no evaluation to derive the control point at this location in time. At high frequencies, however, this generates a great deal of data that may be prohibitive for some technologies, such as wireless control, to evaluate.

B. Output time histogram

For each parametrically defined control point in time, which may be sampled at a solver rate, a search must be performed to discover how much output sources can contribute through time. This can be achieved by building a histogram table describing when in time accessible transducers can contribute energy to an assumed control point. For each control trajectory, the transducer models must be evaluated to produce a measure of the useful deposited acoustic quantity, which is summed up at each point in time to produce the output-time histogram for the interval along the trajectory in space and time.

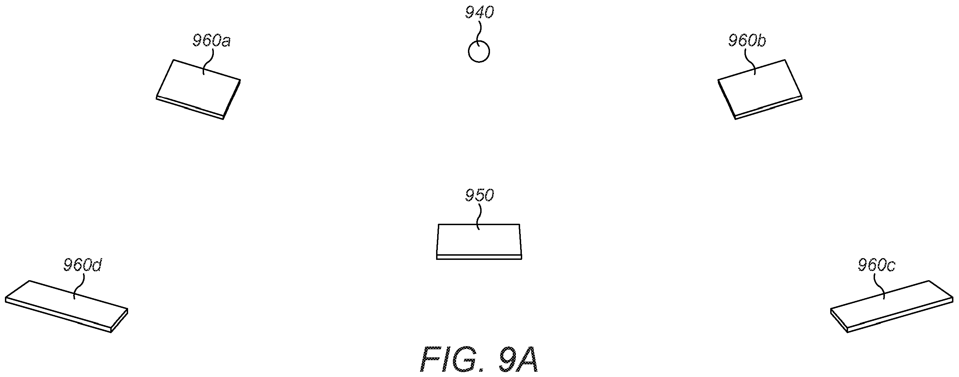

Shown in Figure 9A is an illustrative example of a system in which there are five arrays. One central array 950 is centrally positioned and four satellite arrays 960a, 960b, 960c, 960d are around the outside 50cm away pointing inwards at a shallow angle. The stationary control point 940 is created centrally at 30cm above the central array. (This system is illustrative only.)

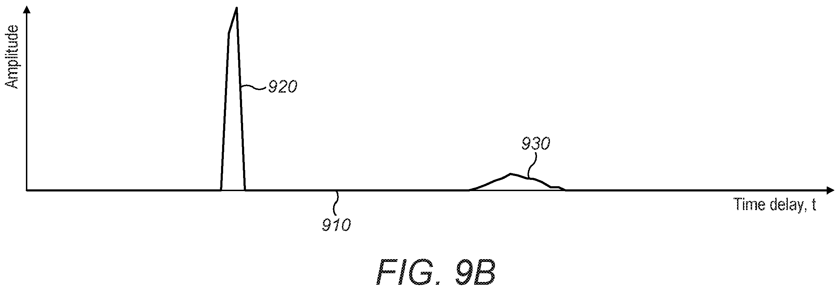

This summation in time for the setup in Figure 9A is set forth in Figure 9B, where such an output-time histogram is shown for a control point sample of the trajectory. Once achieved, this is stored alongside a series or series representation of time histogram for the relevant portion of the trajectory. By necessity, this is the latest portion of the trajectory, as such a portion becomes outdated the moment transducers are no longer able to contribute to it. On the other hand, taking the trajectory data too early implies too great a maximum distance for the waves to travel and an unnecessarily long latency, during which time the user may have insisted on alternative data.

Turning in more detail to Figure 9B shown is a graph 910 of a time histogram corresponding to the illustrative layout of Figure 9A. In this output time histogram, the central array is the first peak 920, followed by a second peak 930 showing the other four arrays further out in time. This demonstrates the effectiveness available for the control point to be actuated at the corresponding point along the timeline, with actual amplitude roughly the area under the curve. This graph 910 clearly shows that although transducer output can be used much more effectively to add to the control point late in time (small delay) by the central array, the outer arrays can still contribute a little but only if actuated earlier (larger delay). For each trajectory, the later basis function steps are intended to effectively split this into roughly equal area sections that are as thin as possible.

C. Control point selection

For each iteration of the solver, if there is a pipelined implementation of the complex-valued linear system solver, there are a limited number of control points that can be solved for at once. In this approach to generating the field, it must be considered how many control points to assign to each active trajectory. If there are many points assigned to a trajectory, then the fidelity of the produced signal in time becomes greater for this additional cost. If there are few points assigned to the trajectory, then a trade-off must be decided upon between the power available to the trajectory and the fidelity of the trajectory in time.

D. Skew output time-space histogram

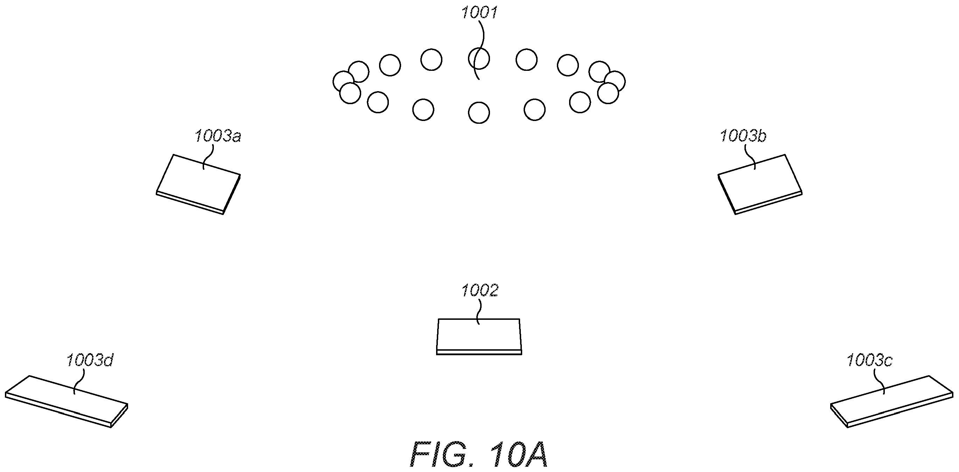

Shown in Figure 10A is an illustrative example of a system in which there are five arrays. One central array 1002 is centrally positioned and four satellite arrays 1003a, 1003b, 1003c, 1003d are around the outside 50cm away pointing inwards at a shallow angle. The single rotating control point 940 is created centrally at 30cm above the central array and is shown in the figure in 16 possible positions. This system is illustrative only.

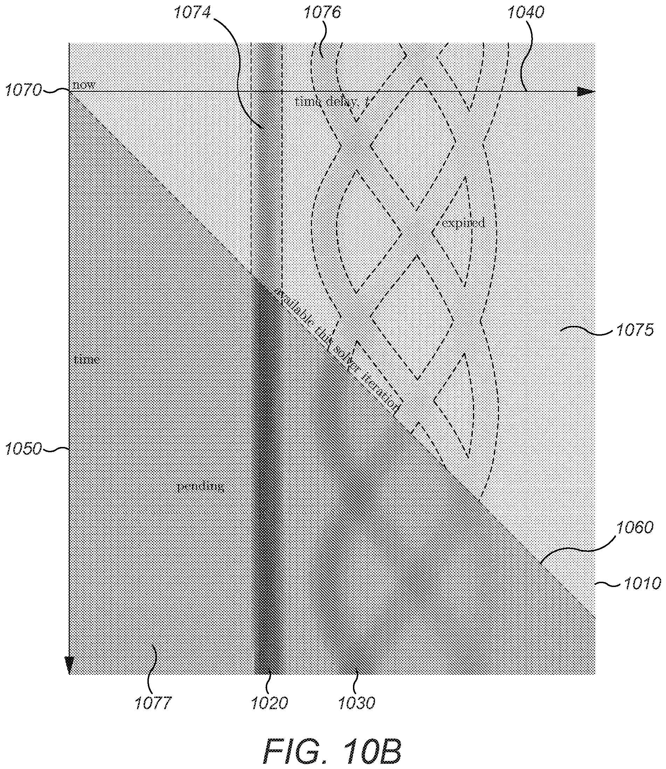

A time-space histogram intersection may be computed as shown in Figure 10B, which is based on the illustrative system of Figure 10A. This time-space histogram considers a series of pre-computed and stored histograms and looks for the intersections where time is equal to the equivalent space. In so doing, the histogram shows what can be actuated at the point in time under consideration to achieve what available additional power at the realization time of the control point in the control trajectory. This results in a further histogram that is skewed through time and space. In other words, Fig. 10B represents a "sound cone" (analogous to a light cone) for a particular arrangement of an array at a particular point in time and space.

This histogram 1010 may be split into equivalent sections in potential output capability so that the available transducers can be used to actuate the trajectory. The control points along the trajectory are chosen as those that are most represented by the intervals. Finally, a set of disjoint intervals in time for each control trajectory that describe targeted time intervals that can be contributed to along the future control trajectory are described.

In more detail, Figure 10B shows a visualization of the final time-space histogram 1010 for the control trajectory featured in Figure 10A. At the top left, the point 1070 in time being considered or "now". The horizontal axis 1040 represents the time delay and the vertical axis 1050 represents the passage of time. What can be achieved for this control trajectory for this array actuation at the time "now", is represented by the diagonal line 1060 reaching into the future. Lighter entries 1075 with available output (shading) 1074, 1076 represent the past or anything in the future that is too far to be reached by a wave in time. Darker entries 1077 with available output (shading) 1020, 1030 in the histogram represent parts of the future trajectory close enough to be modified by a current or future wave. Heuristics may be used to simplify the information in this histogram without ceasing to be an embodiment of this invention. The time delay may take negative values to provide the ability to create divergent beams which are beneficial in some circumstances, such as parametric audio. Due to physical considerations it will be likely necessary to define boundaries in both near and far time to limit the bandwidth and latency requirements of an embodiment.

The straight line shading 1020 represents the potential sound energy available from the central array 1002 which is always the same distance to the control point moving in a circle 1001 (shown in Figure 10A). The curved lines shading 1030 represents the potential sound energy available as the point moves through the circle where each of the 4 satellite arrays 1003a, 1003b, 1003c, 1003d apparently move with reference to the control point (shown in Figure 10A). The darkness of the shading in lines 1020 and 1030, represents the amount of output that can be contributed to the control point with a given time delay. The shading of lines 1074 and 1076 represent potential energy that cannot be used because it is in the past or too far in the future to be reached by a wave in time.

Where line 1060 meets point 1070, this corresponds to a point directly on the array that has a zero time delay for energy to reach it. Thus, if there was a transducer at the control point, there would be no time delay.

Ultimately, Figure 10 shows only the aggregate potential sound energy available for a given physical arrangement of a system of transducers. Whether all of the potential sound energy is actually used in any given system requires further analysis.

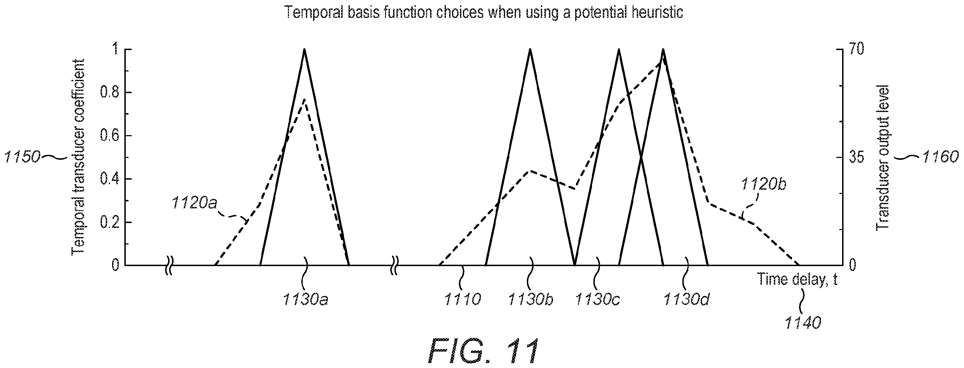

Figure 11 shows an example of how a transducer output histogram 1110 curve may be used in a heuristic manner to define temporal coefficients that choose the proportion of each transducer that goes towards a basis function. The "t" is a continuous horizontal axis 1140, and may have both negative and positive values.

In this case there are four separate basis functions 1130a, 1130b, 1130c, 1130d. The four separate basis functions 1130a, 1130b, 1130c, 1130d are intended to focus at four separate samples of the control trajectory and are measured by the temporal transducer coefficients shown in the left vertical axis 1150. Figure 11 is also a representation of the cross-section of the histogram 1010 along line 1060. The dashed lines 1120a, 1120b are a mock-up of equivalent data resulting from the setup in Figure 10A, and are measured in an arbitrary output level unit shown in the right vertical axis 1160.

The goal of Figure 11 is to calculate a discrete temporal basis functions that allow access of as much of the available transducer output level as possible.

The aim of any heuristic for this choice is to find a set of simply defined basis functions that maximize the useful transducer output power at the appropriate distance time delay.

E. Generating control point basis functions

Having obtained the time intervals alongside each of the control points, this data is then used to generate basis functions used for the linear system and to expand the coefficients output from the linear system back into the coefficients required for individual transducers to output. To achieve this, the intervals are used to modulate how much a given transducer is allowed to influence a control point. The modulation provided by the interval may be feathered in time where it shares an endpoint with another interval, or it may be allowed to extend a finite quantity of time outside its range or infinitely if there is no data available. This resulting modulation curve governed by the interval is parameterized on the time-of-flight calculated from each individual transducer and modulates its contribution. In this way, each transducer contributes to the control point over prearranged time intervals in a way that allows for a range of temporal accuracy versus effective power level trade-offs.

F. Alternative basis function definition

An alternative heuristic to the full histogram generation, if the system controls all transducers at once, may be found by simplifying the full histogram on the fly. This is achieved by determining a central time offset for the basis function and defining either implicitly or explicitly the fall-off with time; the spatial parameters of the basis functions are defined in a manner consistent with previous work. By describing these basis function parameters for twice the number of allowable control points, having pre-selected how many points are to be taken from each trajectory, heuristics may again be applied to adjust the basis function behavior in the instances where the count of basis functions for any trajectory is changing with time. Computing twice the allowed number means that these basis functions may be used in the case that the each sample point is split in two to increase the temporal resolution. These may be merged in the instance that the number of basis function for a control trajectory does not change, or merged twice in the case that the number is intended to decrease. Specialized heuristics may be used in the cases wherein multiple basis functions straddle a gap in time where no output or transducer is available to construct the trajectory.

G. Optimization and eigensystem matrix building

Even with the added modulation provided by the time interval parameterizations, the 'measurement'-type matrices required by the eigensystem remain the same as the 'optimization'-type matrices required by the core linear system solver, scaled by a diagonal matrix. It is not obvious that these two matrices should be similar due the differing requirements. Recall that the 'optimization'-type matrix is produced by product of two larger optimization matrices $A^HA$, wherein A the basis wave functions have been produced for each individual transducer. For the 'measurement'-type matrix, each transducer actuation coefficient is paired with a transducer attenuation coefficient that bears a conjugate value to 'measure' a simulated wave function field at a given location. These are similar because the extra 'push' needed to create the basis function for the output at a point is the same as the reciprocal of the attenuation. If the extra modulation of the basis function created by the time dependent histograms is viewed as modelling a further attenuation that operates in the time dimension, this allows both matrix types to be the same matrix with the diagonal multiplication as before.

H. Partial eigensystem calculation

Having obtained the modelled eigensystem matrix as before, there is a new and different problem. While each transducer can, in this approach, only influence a given control point sampled from the trajectory once, the array or arrays can at different points in time influence the same control point multiple times. In such a situation, the control point phase choices at these different points in time must agree, or the waves used to create the control points would not be coherent on arrival and so interfere in an uncontrolled way. This is unwanted and so there is a need to modify the power iteration, the repeated computation of the Ritz-Rayleigh iteration, to account for the decided phases that can no longer be changed.

The first modification required to the eigenvector determination procedure is that phases that are pre-determined must be recorded and marked at that point in time. Then the remainder of the eigenvector procedure around the components of the vectors that have been predetermined on previous solver iterations governing previous states of the array or arrays in time may be continued. To achieve this, on each iteration phase normalization is performed, but instead of normalizing the average phase to be zero, the normalization is changed so that the average phase is the average phase of the components that are predetermined. In this way, the vector is pushed maximally towards the predetermined maximum phase. At the end of each iteration, the predetermined components are enforced by replacing their iterated and changed versions with the original versions. Although this may result in suboptimal eigenvectors, it ensures maximum effectiveness of any new components within the constraints of those that are pre-existing and so unchangeable. On completion, the new phases are saved to the table, and earlier phases may be interpolated in to produce phases for any further undecided out-of-order points in time.

I. Linear system solution and output

Having determined the phase of each control point along the control trajectory, the usual matrix $A^H A$ complex-valued optimisation can solve the remainder. Expanding out the basis functions in individual transducers gives the activation coefficients needed to actuated the transducers in the device.

VII. Control Techniques For Parametric Audio

A. Summary

By dividing the surface into individual source transducing elements and modifying the path delays for each element, for the signal in both the ultrasonic and the modulation signal generally in the audible spectrum, the entire signal may be brought to a focus, either in front or, in the case of negative path length or time delay, behind the transducer array. This produces a phase accurate point source, whose phase is substantially equivalent to the phase distribution in the signal if it were emitted from a real point source in the specified location.

However, within the current state of the art, building a system consisting of multiple phase accurate point sources is not possible. If it could be done, it would be commercially important, since large, expensive and cumbersome speaker systems involving multiple elements could be replaced by a single parametric speaker.

Multiple control trajectories-curves defined parametrically in space and independent in time with a specific modulation scheme-may generated spatio-temporal basis functions targeted at discrete spatio-temporal points along these curves and after solving complex-valued linear equations recreate multiple discretized output signals at these points. These discretized output signals when demodulated by the non-linear action of the air substantially recover corrected signals that reproduce the audio but without the problematic phase cues present in traditional parametric audio systems.

B. Introduction

Parametric audio has been effectively used for many years, using the non-linear demodulating effects of air; the leakage of energy from the ultrasonic signal due to the air moves the vibrations into other frequencies, including those that are audible.

It is known that amplitude modulating with the square root of an audible waveform that has been shifted to make it always positive may be used to induce these non-linearities to substantially reproduce the desired waveform in the audible spectrum. This modulation signal can be further corrected via a Hilbert transform and frequency dependent filtering to invert some of the distorting effects of the non-linear sound reproduction.

Previously disclosed was that using an ultrasonic array to create a focus and modulate this by a movement back and forth in space may be used to generate an arbitrary audible signal.

Further, modulating the signal with a linear shift in phase angle proportional to the waveform may be used to generate an audio signal also using the non-linear breakdown of the ultrasonic signal. By interpreting the audio signal as a scaled phase angle offset at the focus or in the wavefront, the audio signal may be reproduced in the air at a focus of a transducer array:

$$p(x) = e^{ikA(t)} \sum_{q=1}^{T} \overline{p_{q,0}(x - x_q)} \, p_{q,0}(x)$$

where q is the transducer index, p the pressure, $x$ the global space coordinate and $x_q$ the local space coordinate and $p_{q,0}$ the unit pressure field function from a transducing element. The audio signal $A(t)$ and constant $k$ may be used to drive a complex-valued coefficient encoding phase angle to generate the signal. This may also be performed on a plane wave or otherwise unfocused system.

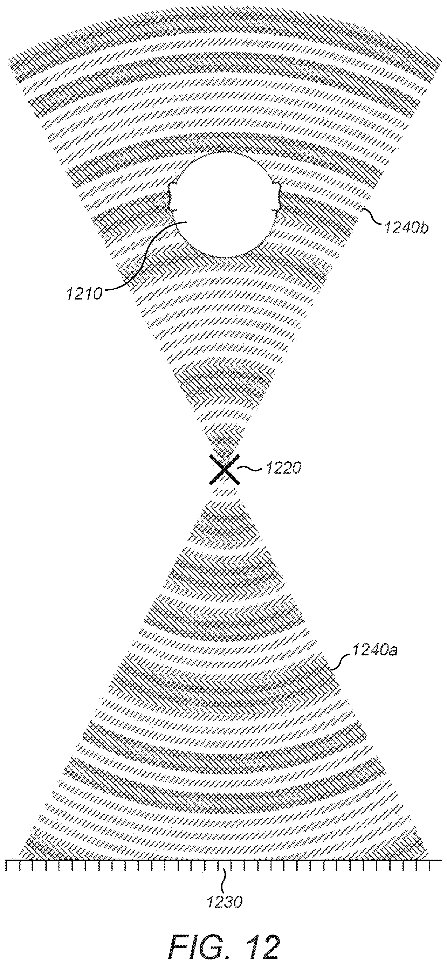

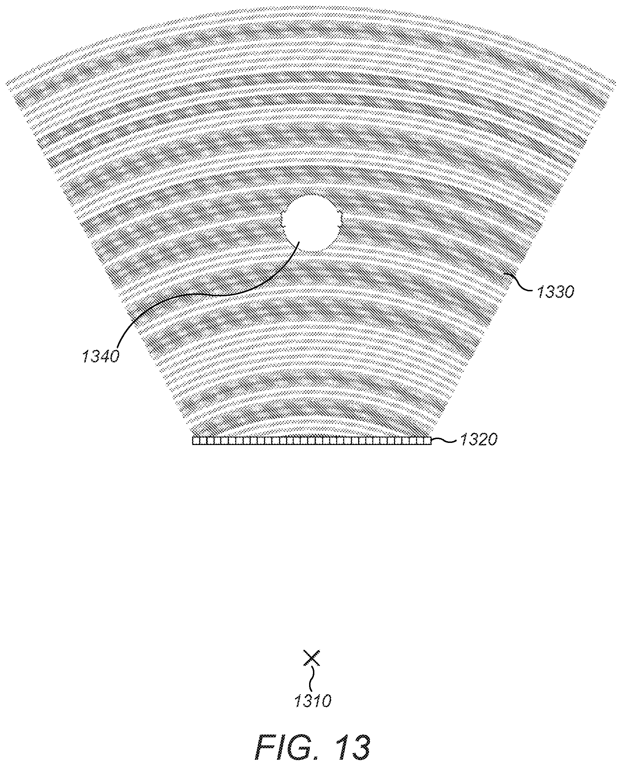

For any of these modulation schemes for parametric audio, while the phases produced in the ultrasonic spectrum may reflect the time of flight from the array element to the focus in the case of a focused ultrasonic array, the delay in the modulated signal (i.e. the audible part) is generally not reflected in the output. The single point case may then be achieved by shifting the modulating signal forwards or backwards in time for each of the transducing elements, such that the signal apparently comes to a focus, as shown in Figures 12 and 13. This produces a spherical wavefront at the at point of focus.

Figure 12 shows the field wherein the ultrasonic wave carrier represents and carries the human audible component 1240a, 1240b produced by a transducer array 1230 into the air using one of the modulation techniques. The intention is that sound is heard by the user 1210 as if being emitted from a phase-perfect virtual point source which is also the focus marked with the cross 1220.

Figure 13 shows a sound field 1330 produced by a point 1310 produced by a transducer array 1320 with a negative time delay, creating the phase-correct illusion of a sound source behind the array for the user 1340. It is also possible to use a negative time of flight to produce a negative phase angle from each of the transducers. This generates a diverging beam (rather than converging beam) from the array.

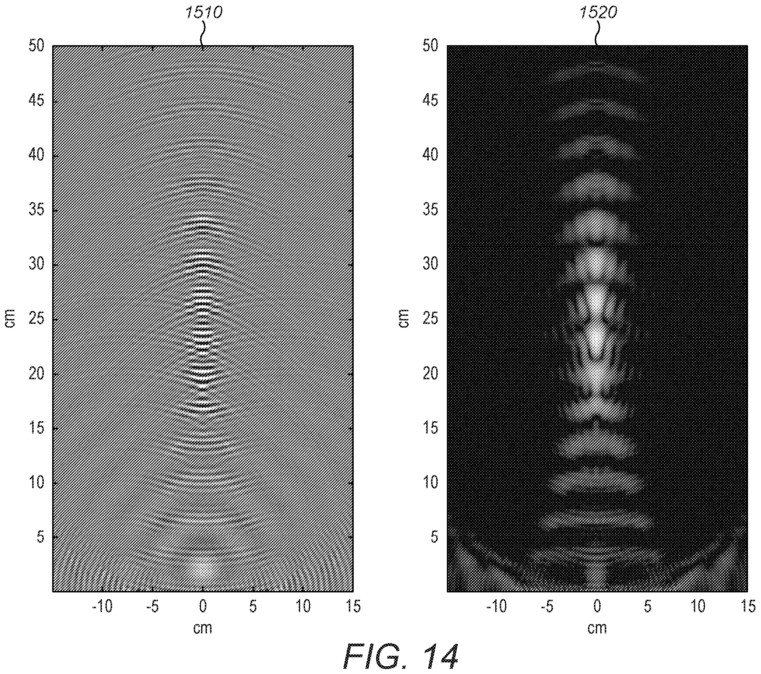

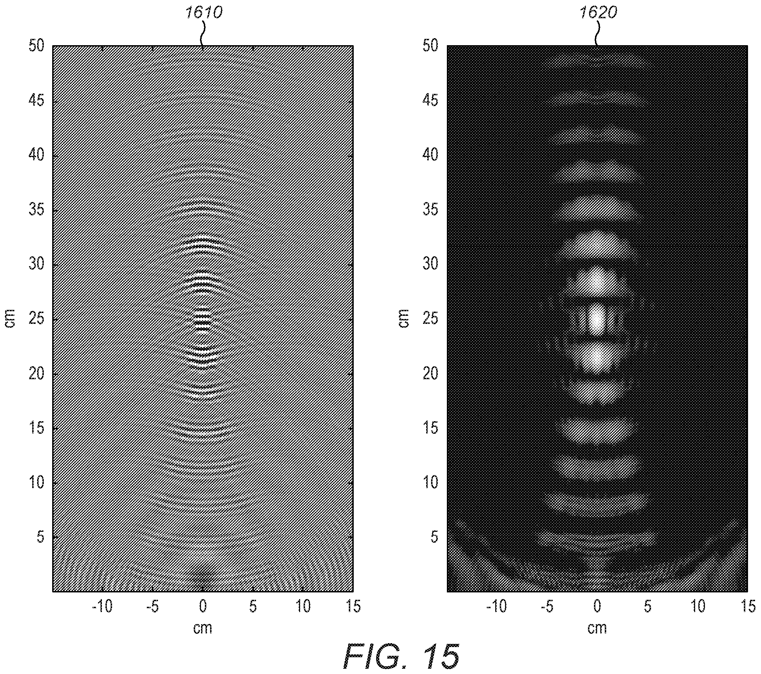

A simulation illustrating the difference between traditional amplitude modulation and this embodiment is shown in figures 14 and 15.

Figure 14 shows a simulated ultrasonic acoustic field with traditional amplitude modulation without phase adjustment. The left side 1510 is the pressure field at an instant in time. The right side 1520 is logarithmic magnitude. Distortion in the modulated field arises as the high-pressure from the modulation near the edges of the array lag behind the middle. This error builds and becomes separated from the ultrasonic wavefronts clear in the left sub figure.

Figure 15 shows a simulated ultrasonic acoustic field at 60kHz with properly phased 10kHz modulation. The left side 1610 is the pressure field at an instant in time. The right side 1620 is logarithmic magnitude. The diverging spherical wavefront appropriate for the virtual point is apparent above the focus point at 25cm.

This technique allows the position specified in space to behave as a phase accurate virtual point source. This is because the phase information encoded in any audible signal propagating forth from such a focus (which may be behind the array, where a negative time-of-flight generates a divergent beam) encodes phase information such that it is substantially the same as a natural point source of sound within the acoustic field of the array system. As this position may be specified dynamically and recalculated by software, this position may be moved in space dynamically through time allowing Doppler effects to arise naturally.

To create a series of phase accurate virtual point sources co-existing in the same global volume and generating separate audio content, the device must remove the cross-talk on each of the point sources. This is achieved by creating a series of control trajectories, a collection of curves that the phase accurate virtual point sources follow through time. By discretizing these curves in a window around the origin in retarded time and building a linear system from the resulting elemental discretized units, a series of independent and flexibly controllable audio sources may be created.

C. Control trajectory sampling

The control trajectory may be specified using parametric curves, or may be initially discretized into elements that are each a wavelength or a multiple of wavelengths in time. These are input to the system with timing, amplitude and phase information such that a known amplitude and potentially a phase offset may be created at or be diverging from the specified point on the parametric curve at the given time. These times are expected to be specified within a time window allowing for a constant known length of the control trajectory curve that is known around the current time which is reflected in the 'depth' of the simulated volume in the retarded time frame.

D. Transducer output modelling

The transducer output must be modelled to determine where in time the energy is deposited with respect to a given control trajectory sample. Each control trajectory sample from each control trajectory is modelled alongside the transducer, resulting in a value representing the quantity of modelled output and a value describing the time of flight. Without loss of generality, for example the scalar quantity of pressure may be desired, so the values output from this modelling step would in this case be both $d(x)$, the distance from the sample point to the transducer 'center' and:

$$p(x) = \frac{a(d)}{d} \delta_a(\theta) k\, k_{\text{cover}} e^{2\pi i(d + \delta_\phi(\theta) + \phi)}$$

where p is the acoustic pressure, $x$ is the displacement vector between the sample point and the transducing element, $k$ is the basic amplitude scaling of the transducer, $k_{\text{cover}}$ is the attenuation of a cover, $\delta_a(\theta)$ a direction dependent amplitude reduction function, $a(d)$ the attenuation of the acoustic wave due to viscous damping and other nonlinear effects, $\delta_\phi(\theta)$ a direction dependent phase change function, $\phi$ a phase offset between the input and output signals. This may also be applied to other linear scalar quantities derived from the acoustic field. The amplitude and phase functions may also be parameterized by spherical coordinates.

Specific to the parametric audio case, if a control trajectory sample is found to be on the opposite side of the device to a transducing element, resulting in the dot product between the transducing element normal and the transducer to control trajectory sample vector to be negative, then the transducer to control trajectory sample vector is reflected across the normal and the final time-of-flight value negated. This models both the new amount by which the control trajectory sample and thus audio signal sample emission must be made later in time, and also models the negation of the phase that results in a divergent beam resulting from virtual nature of the point. Note that it is possible for a point to have both negative and positive time of flight at once from different transducing elements This does not result in any contradiction, as the correct waveform is produced in both cases. Nonetheless, any transducers for which a negative time-of-flight value is found may contribute to the wave-front but not to the initial point representing the control trajectory sample.

### E. Parametric audio modelling

The parametric audio produced by the field can be modeled for a given frequency by integrating the ultrasonic field,

$$p_{audio}(\boldsymbol{x}) = \int A\, p_s(\boldsymbol{x}) \delta_a(\theta) \frac{e^{i(k|\boldsymbol{x}-\boldsymbol{x}'|)}}{|\boldsymbol{x}-\boldsymbol{x}'|}\, dV',$$

where r' is the distance from the sample point to the source point, k is the wavenumber of the audio, $\delta_a(\theta)$ is a direction dependent amplitude reduction function, A is a complex factor related to the air and the frequency of audio, and $p_s(\boldsymbol{x})$ is the nonlinear source pressure from the ultrasound given by,

$$p_s(\boldsymbol{x}) = G\frac{d}{dt}p(\boldsymbol{x})^2,$$

where G is a nonlinear scaling factor related to the medium (air). In order to produce a perfect audio point source, the wavefront of the audio should be perfectly diverging from the desired source point. The above methods described will generate an ultrasound signal which will demodulate in this way only after the virtual points. Between the transducers and the virtual points, audio produced will be subject to diffraction at their (larger) wavelengths. This produces a deviation from a spherical wavefront after the focus.

To correct for this error, the system can first estimate the audio acoustic field using the formulas above. The difference between the estimate and a perfect spherical wavefronts for the given frequency ranges of interest forms an error signal. Using an iterative approach, a field $p'(\boldsymbol{x})$ is generated and then produced whose $p_{audio}(\boldsymbol{x})$ is equal and opposite in phase to the error signal. To achieve this in a real-time system, methods of numerical integration and approximation may be employed to efficiently estimate $p_{audio}(\boldsymbol{x})$.

A further source of error can be found in the relative transducer amplitudes themselves. Different transducers have different path lengths and therefore introduce different amounts of parametric audio to the focus. As each transducer is effectively generating a localized diverging wave of audible sound along its path to the focus, this results in undesirable variation in each wave as it travels through the focus, and thus variation in the directivity of the phase accurate virtual point source. A further function term must therefore be added to the transducer model when generating the basis function for the system, whose form describes the proportion of $p_{audio}(\boldsymbol{x})$ generated by each transducing element. This is to account for such variation in the directivity of audio production from the point source, allowing the shaping and manipulation of this directivity. This is also important in the negative time-of-flight case to describe how much audio should have been generated along the virtual path to the surface of the array and provide amplitude compensation for the missing sound. Importantly, as the variation added relies on the initial ultrasonic pressure and contributes to the final ultrasonic pressure, this additional term must be approximated or iteratively refined. It is also noteworthy that as this term need only be proportionally correct at this stage. For this reason, it may be approximated in the basis function generation and corrected at a later point in the process, most likely by modifying the amplitude to be generated at the point sources to affect the correction.

To simplify the calculations, the analysis may be restricted to a select few frequencies which are most important for forming spatial cues in the audio. In another arrangement, the audio calculated would only include ultrasonic sources up to the virtual points and disregard the field(s) afterwards as they are unlikely to deviate from a spherical wavefront.

### F. Power histogram and basis function generation

For each control trajectory sample, every transducer in the system is modeled to determine not only the magnitude of linear output that it can contribute to it but also the time delay required for output from any one transducing element to reach the point sample. In the case of the virtual point being behind the transducer, this models the time taken for the wave to reach the array from the point. This is to ensure that waves emitted from the array modify appropriate point in the acoustically actuated volume at the correct times.

A histogram is then built from these results, wherein a series of 'buckets' are created and zeroed each roughly corresponding to the length of time of the discrete samples from the control trajectory samples, which may include buckets covering negative values only or positive values only or both negative and positive values. The results from the transducer output modelling are summed into each bucket in the case of corresponding recorded time-of-flight values.

These results then describe how much the array output affects each point at each offset in time. These may be used immediately as separate basis functions, or grouped further. Further grouping of the buckets may be achieved by computing k-means over the buckets to find a smaller set of basis function definitions, but generally roughly the same amount of linear output should be creatable by each basis function on each trajectory to reduce time step variation in output deposition. To avoid sharp changes, filtering may be applied to the results of the k-means algorithm to ensure that movement of the basis function in time does not occur quickly, as the change in output from transducer may create extra noise.

The purpose of the summation is to split the array in the temporal axis. The approach described here modulates each basis function along the temporal axis - the trade-off being that narrower modulations in time provide more precisely tuned the time-of-arrival from each basis function, at the cost of fewer transducers that can be used and thus lower power available to the basis function produced.

The set of basis functions for each point in 'real' (not retarded) time are placed into a histogram table, wherein a further function will select which basis functions are to be used at what time.

G. Basis function selection

For each point in real time at the array, basis functions must be selected from the histogram table that correspond to this point in retarded time, as the basis functions were initially created assuming a 'real' time. This corresponds to finding basis functions in the temporal histogram buffer area that correspond to where the basis function centers on the temporal axis crosses the offset from the current time. This leads to a selection of different basis functions corresponding to different points in real time, for a single instant or small window of emission. This functions to allow the time-of-flight to each sample point to be accounted for, in order to solve for the state of the whole array at this instant in time.

Each trajectory may at any one point in emission time have multiple basis functions that correspond to the points that the waves are intended to converge to (or diverge from). These are multiple samples along the control trajectory and are involved in the solution for different points in time in the acoustic field. This is somewhat counter-intuitive, although it is correct as the same waves emitted at the array will pass by every point involved in the solution in retarded time.

It also remains necessary to prevent sharp changes occurring in the acoustic field, so for instance if the number of point samples that is desired on a trajectory changes, then there must be a small delta change between the distribution of power at t and the distribution at $t + 1$. This may be achieved by seeding new basis functions at artificially low output levels and growing them in output power into new regions on the temporal axis. The number of point samples on a trajectory may change often to better allocate a limited number of basis function 'slots' available in a firmware or hardware implementation to different points.

At the end of this process, an A matrix is produced in a similar way to previous disclosures such that each entry represents the expected acoustic field emitted from a transducer at each sample point. The other matrices involved in the linear system solution are again produced by constructing from this a C matrix:

$$C = A^H A.$$

H. Waveform limiting

It is necessary to limit the amplitude of the ultrasonic output at the control trajectory samples for many reasons, but importantly when dealing with a temporally dynamic solution of this kind it should be achieved both per basis function and per control trajectory. The per control trajectory limit should be a filtered limiting system to ensure that the waveform envelope cannot exceed the maximum output that can be created at a point. This maximum output is necessarily the sum of the limits generated by each basis function and should be used to modify the dynamic range of the input. The limits for each basis function should be based on the waveform limiting dynamics previously disclosed, wherein a limiting case is used with the solver and this informs the limit for the basis function. In this case however, the global limit is split by the number of available basis functions and fed into the solver which determines the maximum allowable output that should be required of the system for each basis function. This heuristic works because as time ticks forward, each control trajectory sample must interact with every basis function once, so each adds a little output onto every trajectory point sampled.

On top of this, it is necessary to use the limiter to compensate for the way the parametric audio formation interacts with different path lengths and amplitudes along the path to each point. As the ultrasound causes the formation of audible sound due to the path length and amplitude of ultrasound, these differences must be accounted for in order to produce point sources whose audible amplitude is repeatable. By evaluating $p_{audio}(\boldsymbol{x})$ for each point, using this to inform further limits on the dynamic range of the usable audio envelope and adjusting the ultrasonic pressure amplitude required at the focus, this can be used to accurately reproduce audio waveforms at the foci of the basis functions. This can be used to inform the limits by use of an iterative technique or via a feedback loop. Splitting of the resulting ultrasonic acoustic pressure may remain linear, as the effects of the conversion non-linearity have already been considered.

I. Eigensystem

An eigenproblem can be constructed and used to ensure that there is no unwanted constructive and destructive interference between the points. By working in retarded time this interference is no longer causal, because due to time-of-flight, points created later in time may affect earlier points and vice versa. The creation of any one point will create extra effects felt on all other points through time, where the relationship between any two points is, as in previous disclosures, represented by each of the elements of the matrix in the eigenproblem:

$$L\boldsymbol{y} = \lambda_{\mathrm{value}}\boldsymbol{y}.$$

The dominant eigenvector (the vector y for which $\lambda_{\mathrm{value}}$ takes its maximum value) is the set of phases that most efficiently preserves the relative levels of the input. This input is taken to be the maximum value that could be desired at each point, which is the envelope in each initially presented. This will be the (possibly reweighted) division of the envelope between each basis function.

In this instance, the eigenvector output must be filtered in angle to prevent sharp changes introducing unwanted frequency content. Specifically the output must be tailored to ensure that the phases of existing points along the control trajectory, which must have spoken for phases, are preserved exactly across time steps. This is to guarantee that each basis function constructively interferes with the other basis functions through time on different time steps such that the resulting summation when each wave reaches its confluence at the focus creates the correct linear output level. Due to this, it is necessary to 'lock' the phases of all of these spoken for control trajectory samples, so that they do not destructively interfere across time. While locking these phases prevents the eigensystem from finding a globally optimal set of interference characteristics, it is intended to guarantee the level of output does not fluctuate by iterating towards an optimum without significant change. This results in acceptable interference characteristics.

At the finalization of the 'eigenvector', as this includes both locked and unlocked phases, the phases from y are applied to the vector of intended amplitudes b, which have been further split with respect to the control trajectory sample amplitudes as only part of each amplitude is to be recreated at the locus of each basis function with differing emission times. This is then the sample vector that is used in the linear system alongside the basis functions to solve for the optimized coefficients.

J. Linear system solution and expansion

As described in previous disclosures, the sample vector and the basis functions are taken as the **C** matrix and **b** vector in a least-norm solution for the complex-valued coefficients **z** that combine the set of basis functions to generate the desired pressure increments at each point in space:

$$C\boldsymbol{z} = \boldsymbol{b}.$$

As each basis function is constructively interfering with other basis functions across time, the resultant behavior is that the linear output levels specified by the user. In this case the audio system that is driving the parametric audio system is reproduced.

The expansion of the **z** vector of coefficients for each basis function follows the approach previously disclosed wherein **z** is expanded as:

$$\boldsymbol{x} = A^H\boldsymbol{z}.$$

where **x** is a complex-valued coefficient that fully describes the sinusoidal signal to drive each transducer with.

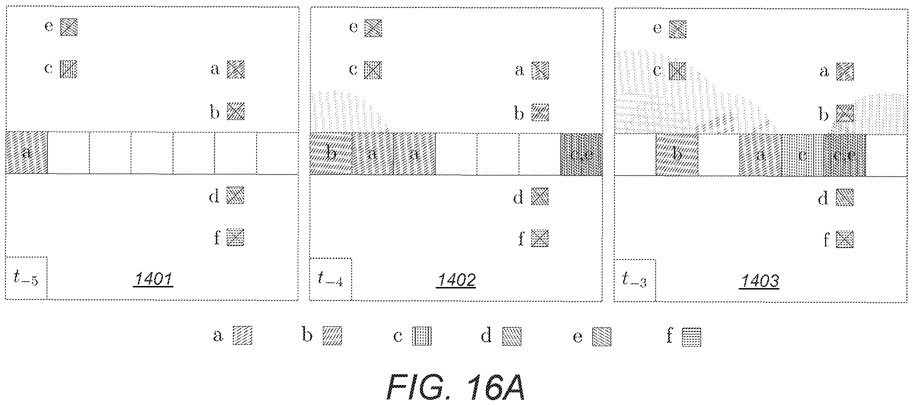

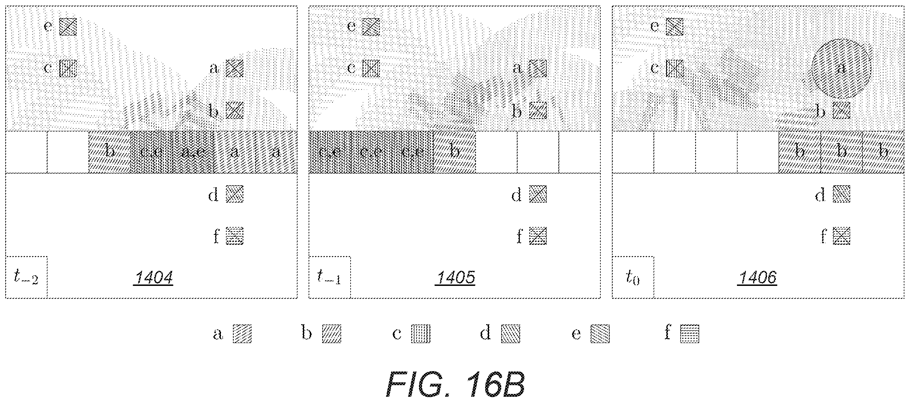

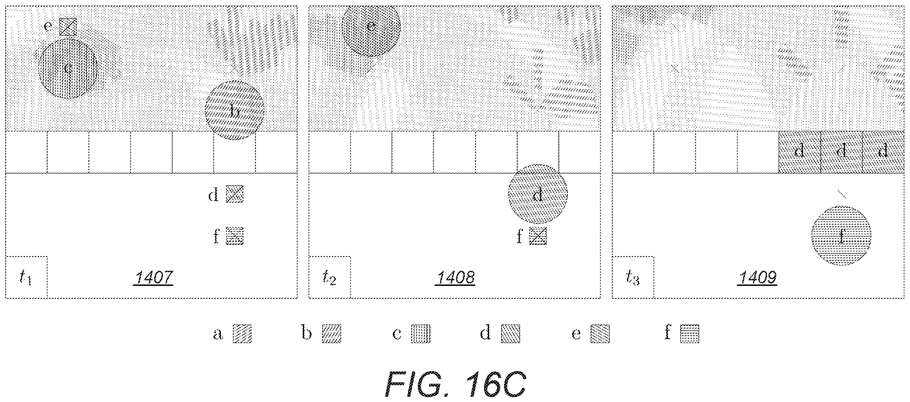

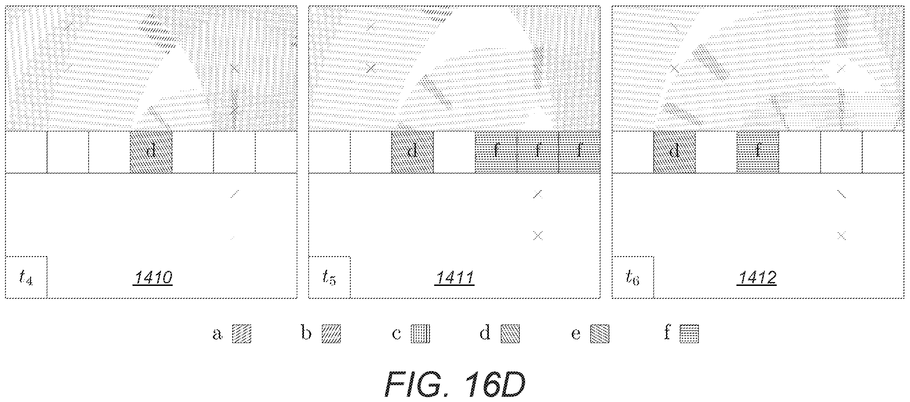

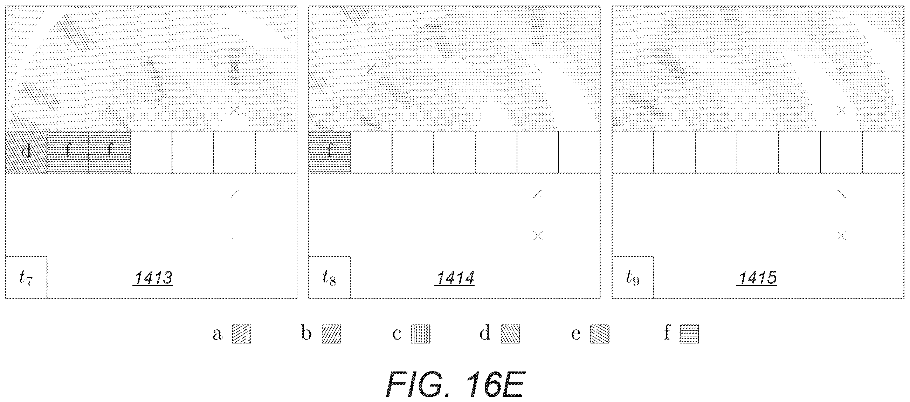

An illustrative example system involving an array of seven transducers detailing physical transducer activations and in-flight waves over fifteen time steps of the solution method described are shown in Figures 16A, 16B, 16C, 16D, 16E.

Figures 16A, 16B, 16C, 16D, 16E show a series of fifteen snapshots at each time step of the behavior of an illustrative system and the state of the waves in the air. The boxes across the center represent the seven transducing elements in the system. There are two incomplete control trajectories described, the longer of which moves through the transducer array and into a virtual space behind. Each sub-figure describes the actuation of transducing elements resulting from solver calculations through time and state of the physical system during each small time window.

In further detail, this simulation models a line of seven transducers and the steps that they will take to actuate four real control points over 3 time intervals: point "a" at t = 0, points "b" and "c" at t =1, and point "e" and t = 2. The transducers propagate waves towards the top of the frame. The transducers will also be actuated to produce virtual control point "d" at time t=2 and virtual control point "f" at time t=3.

As shown by the key in each of the Figures 16A, 16B, 16C, 16D, 16E, the six different types of shading shown for the transducers, propagating waves and boxes at the control point correspond to actions related to the actuation of each of the six control points at their respective times. At some intervals, there is an overlap of two control point-related actions, which produces a cross-hatched pattern comprised of two overlapping shading types.

Beginning at t = -5 1401, a basis function including the leftmost transducer is generated to add to the "a" point, with the leftmost transducer being consequently actuated.

At t = -4 1402, a wave begins propagating towards the "a" point from the originated location at the leftmost transducer, which is also now used in a second basis function for point "b". The rightmost transducer starts being included in both a third basis function for point "c" and the fourth basis function for the point "e". These four basis functions are then solved for to find coefficients describing how to create the extra output at the point "a", and the new output at points "b", "c" and "e".

At t = -3 1403, different transducers are used to build the four basis functions for the "a" point at t = 0 and the "b" and "c" points at t = 1 and the "e" point at t = 2.

At t = -2 1404, all four basis functions are being solved for and waves from previous time steps are in flight to all four points "a", "b", "c" and "e".

At t = -1 1405, no more transducers are able to contribute to the "a" point, and so this is no longer included in the basis set, reducing the number of basis function in the solutions to three for points "b", "c" and "e".

At t = 0 1406, the waves in flight during the previous ticks coalesce to a focus at point "a" and the only point that may still be affected is the point "b", for which three transducers are actuated in a single basis function.

At t = 1 1407, the two t = 1 points "b" and "c" are actuated using waves that are already in flight.

At t = 2 1408, the last real point "e" is actuated at the same time as a virtual point "d" behind the array, which is only notionally 'actuated' as no physical waves or transducers are involved.

At t = 3 1409, the outgoing waves from the virtual t = 2 point break across the surface of the transducer array in the form of a negative time-of-flight basis function. The virtual point "f" is also 'actuated'.

At t = 4 1410, the t = 2 "d" point continues to generate waves across the surface of the array, while notionally virtual wavefronts are moving towards the surface of the array from the t = 3 "f" point, but no real waves from the t = 3 "f" point exist yet.

At t = 5 1411, both basis functions for both virtual points "d" and "f" are solved for in reverse time to ensure the phase accuracy and consistency of their respective signals.

At t = 6 1412 and t = 7 1413, these two basis functions continue to be solved for as subsequent transducers generate more of the simulated spherical wavefronts for both of the virtual points.

At t = 8 1414, the last leftmost transducer is included in the final spherical wavefront and at t = 9 1415, no more wavefronts can be produced, the array having successfully rendered all the points "a", "b", "c", "d", "e" and "f".

The system described above is illustrative. Similar system using a different number and layout of transducers and a different number and layout of control points may be created.

K. Applications

By using a system that accounts for the differences in time-of-flight between transducers and specified spatial positions along a trajectory (that may be a single point), a series of such virtual phase-corrected point sources may be generated (which may be moving in time). In the limit, this enables any form of spatial speaker arrangement to be recreated using parametric audio, which potentially may be used to recreate any speaker setup with high fidelity.

This system is not possible with audio speakers as the reconstruction of point sources is prevented in these cases by the wavelength of the sound, without consideration of the phase adjustment. Parametric audio on the other hand is limited primarily by the ultrasonic wavelength, and thus is capable of creating sound sources that are significantly more point-like and precise than any producible by means utilizing audible sound only.

However, there is a further coronary, as these sound sources do not have physical presence and can be moved and placed arbitrarily. This allows a scene of sound to be decomposed as a set of point sources and created not as channel of audio played on speakers, but as audio streams that are emitted by and correspond to any number of point virtual sources that may move, diverge and regroup freely in three-dimensional space.

These points may use any of the existing modulation schemes for the reproduction of audio using an ultrasonic carrier as generated by a phased array system, as the particular phase and amplitude characteristics that give rise to the parametric audio are perfectly synchronized at these points. Further, as parametric audio is capable of reproducing higher audible frequencies, but has significantly more difficulty reproducing lower frequencies, this may be combined with other more traditional lower frequency generation hardware. In this case, it is beneficial that due to the size of the human head generally only frequencies that can be substantially reproduced by parametric audio hardware carry sufficient phase cues that can be interpreted by humans to infer spatial positions. In this case, taking the weighted signal of the low frequencies required across each of the virtual sources and using a different method of low frequency reproduction such as a traditional speaker may be beneficial.

To find points in space that may be reproduced as point sources, a source separation algorithm may be applied to the signal resulting from a microphone array. By alternating between cross-correlation and other methods to identify time of flight for individual signals, and source separation algorithms such as principal component analysis (PCA) or non-negative matrix factorization, both a suitable position for the point source and the desired audio stream for the point source to emit may be found. By constructing an objective function whose aim is to recover the original sound field or at least the measurements of the field produced by a microphone array, these techniques may be iterated towards a solution. It may be necessary to consider the diffraction of the audio signals as they are slowly reconstructed through the action of the ultrasonic demodulation in space to achieve this, although the effects of the diffraction of these signals is expected to be small. On taking the entirety of the field, in the limit of many point sources, the original sound scene may then be reconstructed perfectly in front, behind or generally in the space of the ultrasonic phased array. This approach is like the way in which an illumination map of a three-dimensional scene in the ray-tracing of scene geometry in computer graphics can be reduced in complexity through discretization. By taking a continuous field and discretizing it into point sources that generate and recreate the field with somewhat reduced fidelity, but optimizing towards the perfect recreation of the field in the limit, the number of discrete calculations required to reach an arbitrary level of fidelity may be reduced.

VIII. Conclusion

While the foregoing descriptions disclose specific values of voltage, capacitance and current, any other specific values may be used to achieve similar results. Further, the various features of the foregoing embodiments may be selected and combined to produce numerous variations of improved haptic systems.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

Moreover, in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a", "has ... a", "includes ... a", "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art. The term "coupled" as used herein is defined as connected, although not necessarily directly and not necessarily mechanically. A device or structure that is "configured" in a certain way is configured in at least that way, but may also be configured in ways that are not listed.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment.

**Claims**

1. A method comprising:

 i) controlling a set of transducers to create an acoustic field exhibiting desired amplitude at a plurality of control points so as to generate haptic feedback in midair;
 ii) encoding a dominant eigenvector of an eigensystem that describes an effect that one control point of given phase and amplitude has on other control points of given phases and amplitudes to approximate a basis vector of a set of linear modifications that have different overall effects on constructive and destructive interference across the control points; and **characterized by**,
 iii) creating a synchronized pseudo-random binary sequence that only requires communication between the transducers to initialize and synchronize; and,
 iv) once initialized, applying a pseudorandom phase walk approach to each control point, whereby transducers contributing to the same control point produce the same pseudo-random phase walk, so as to reduce communication between the transducers to be able to contribute to the same control point in the acoustic field.

2. The method as in claim 1, further comprising:
 v) ensuring that a phase expressed at one of the control points does not change more than a given angular amount, wherein the given angular amount is determined by taking a ratio of each of a unit amplitude complex-valued components of the eigenvector in a current time-step to a corresponding set of complex values in a previous time-step.

3. The method as in claim 2, wherein ensuring that the phase expressed at one of the control points does not change more than the given angular amount occurs through complex-valued division.

4. The method as in claim 1, wherein the pseudorandom phase walk approach is applied through time by choosing to walk either in negative or positive phase angle depending on the bits of the synchronized pseudo-random binary sequence.

**Patentansprüche**

1. Verfahren, umfassend:

 i) Steuern eines Satzes von Wandlern, um ein akustisches Feld zu erzeugen, das eine gewünschte Amplitude an einer Vielzahl von Steuerpunkten zeigt, um so in der Luft eine haptische Rückmeldung zu erzeugen,
 ii) Codieren eines dominanten Eigenvektors eines Eigensystems, der einen Effekt beschreibt, den ein Kontrollpunkt mit gegebener Phase und Amplitude auf andere Kontrollpunkte mit gegebenen Phasen und Amplituden hat, um einen Basisvektor eines Satzes linearer Modifikationen anzunähern, die unterschiedliche Gesamteffekte auf konstruktive und destruktive Interferenz über die Kontrollpunkte hinweg haben, und **gekennzeichnet durch**
 iii) Erstellen einer synchronisierten pseudozufälligen Binärsequenz, die lediglich die Kommunikation zwischen den Wandlern zum Initialisieren und Synchronisieren erfordert, und
 iv) nach der Initialisierung, Anwenden eines pseudozufälligen Phasengang-Ansatzes auf jeden Kontrollpunkt, wobei Wandler, die zu demselben Kontrollpunkt beitragen, denselben pseudozufälligen Phasengang erzeugen, so dass die Kommunikation zwischen den Wandlern reduziert wird, um in der Lage zu sein, zum gleichen Kontrollpunkt im akustischen Feld beitragen.

2. Verfahren nach Anspruch 1, ferner umfassend:
 v) Sicherstellen, dass sich eine an einem der Kontrollpunkte ausgedrückte Phase nicht mehr als einen gegebenen Winkelbetrag ändert, wobei der gegebene Winkelbetrag bestimmt wird, indem ein Verhältnis jeder komplexwertigen Einheitsamplitudenkomponente des Eigenvektors in einem momentanen Zeitschritt zu einem entsprechenden Satz komplexer Werte in einem vorherigen Zeitschritt ermittelt wird.

3. Verfahren nach Anspruch 2, wobei das Sicherstellen, dass sich die an einem der Kontrollpunkte ausgedrückte Phase nicht mehr als den gegebenen Winkelbetrag ändert, durch komplexwertige Division erfolgt.

4. Verfahren nach Anspruch 1, wobei der Ansatz des pseudozufälligen Phasengangs über die Zeit angewendet wird, indem entweder ein Gang im negativen oder im positiven Phasenwinkel abhängig von den Bits der synchronisierten pseudozufälligen Binärsequenz gewählt wird.

**Revendications**

1. Procédé comprenant:

   i) la commande d'un ensemble de transducteurs pour créer un champ acoustique présentant l'amplitude souhaitée au niveau d'une pluralité de points de commande de manière à générer un retour haptique dans les airs;
   ii) le codage d'un vecteur propre dominant d'un système propre qui décrit un effet qu'un point de commande de phase et d'amplitude données a sur d'autres points de commande de phases et d'amplitudes données pour produire une approximation d'un vecteur de base d'un ensemble de modifications linéaires qui ont des effets globaux différents sur une interférence constructive et destructrice sur les points de commande; et **caractérisé par**,
   iii) la création d'une séquence binaire pseudo-aléatoire synchronisée qui nécessite uniquement une communication entre les transducteurs pour l'initialisation et la synchronisation; et,
   iv) après l'initialisation, l'application d'une approche de marche en phase pseudo-aléatoire à chaque point de commande, de sorte que les transducteurs contribuant au même point de commande produisent la même marche en phase pseudo-aléatoire, de manière à réduire la communication entre les transducteurs pour pouvoir contribuer au même point de commande dans le champ acoustique.

2. Procédé selon la revendication 1, comprenant en outre:
   v) la garantie qu'une phase exprimée au niveau de l'un des points de commande ne change pas plus qu'une quantité angulaire donnée, dans lequel la quantité angulaire donnée est déterminée en prenant un rapport de chacune des composantes de valeur complexe d'amplitude unitaire du vecteur propre dans un pas de temps actuel à un ensemble correspondant de valeurs complexes dans un pas de temps précédent.

3. Procédé selon la revendication 2, dans lequel la garantie que la phase exprimée au niveau de l'un des points de commande ne change pas plus que la quantité angulaire donnée se fait par division de valeurs complexes.

4. Procédé selon la revendication 1, dans lequel l'approche de marche en phase pseudo-aléatoire est appliquée dans le temps en choisissant de marcher en angle de phase négatif ou positif en fonction des bits de la séquence binaire pseudo-aléatoire synchronisée.

FIG. 1A

FIG. 1B

Scaled logarithm of intensity - relative dB SIL, from 4 point, 200Hz circle

Sample number

*FIG. 1C*

Scaled logarithm of pressure - relative dB SPL,
static point with 200 Hz amplitude modulation

Sample number

*FIG. 2A*

Scaled logarithm of speed - relative dB SVL,
static point with 200 Hz amplitude modulation

*FIG. 2B*

Scaled logarithm of intensity - relative dB SIL,
static point with 200 Hz amplitude modulation

*FIG. 2C*

FIG. 3

FIG. 4

*510*

*520*

Inside region

Outside region

*FIG. 5*

FIG. 6

*FIG. 7*

EP 3 616 033 B1

FIG. 8

FIG. 9A

FIG. 9B

FIG. 10A

FIG. 10B

Temporal basis function choices when using a potential heuristic

FIG. 11

1240b

1210

1220

1240a

1230

FIG. 12

1330

1340

1320

1310

FIG. 13

FIG. 14

EP 3 616 033 B1

EP 3 616 033 B1

*FIG. 15*

FIG. 16A

*FIG. 16B*

*FIG. 16C*

FIG. 16D

FIG. 16E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62489073 B
- US 62507822 B
- US 62511125 B
- US 62617515 B

- US 62652393 B
- US 62655169 B
- US 62655386 B
- US 20160249150 A1

**Non-patent literature cited in the description**

- **BENJAMIN LONG et al.** Rendering Volumetric Haptic Shapes in Mid-Air using Ultrasound. *ACM TRANSACTIONS ON GRAPHICS, ACM, NY, US,* 19 November 2014, vol. 33, 1-10

- **D. ADALSTEINSSON ; J. A. SETHIAN.** The Fast Construction of Extension Velocities in Level Set Methods. *Journal of Computational Physics,* 1997